# EUROPÄISCHE PATENTSCHRIFT

(11) **EP 4 167 393 B1**
(45) Veröffentlichungstag und Bekanntmachung des Hinweises auf die Patenterteilung: **21.05.2025**
(21) Anmeldenummer: 21202474.9
(22) Anmeldetag: 13.10.2021
(51) Int. Cl.: H01R 13/627, H01R 43/18, B29C 45/33, B29L 31/34

(54) **STECKVERBINDERGEHÄUSE, SOWIE SPRITZGIESSVERFAHREN UND SPRITZGIESSVORRICHTUNG ZUR HERSTELLUNG EINES STECKVERBINDERGEHÄUSES**
CONNECTOR HOUSING, INJECTION MOULDING METHOD AND INJECTION MOULDING APPARATUS FOR MANUFACTURING A CONNECTOR HOUSING
BOÎTIER DE CONNECTEUR ENFICHABLE, AINSI QUE PROCÉDÉ DE MOULAGE PAR INJECTION ET DISPOSITIF DE MOULAGE PAR INJECTION DESTINÉS À LA FABRICATION D'UN BOÎTIER DE CONNECTEUR ENFICHABLE

(43) Veröffentlichungstag der Anmeldung: 19.04.2023
(73) Patentinhaber: Rosenberger Hochfrequenztechnik GmbH & Co. KG, 83413 Fridolfing (DE)
(72) Erfinder: Schmidt, Christian, 83362 Surberg (DE); Krejber, Alex, 83410 Laufen (DE); Thaler, Michael, 83374 Traunwalchen (DE); Fischer, Andreas, 83549 Eiselfing (DE)
(74) Vertreter: Lorenz, Matthias

(56) Entgegenhaltungen:
- EP-A2- 0 812 038
- DE-A1- 19 502 387
- JP-A- 2013 068 726
- US-A1- 2004 248 453
- US-A1- 2012 282 791
- US-A1- 2018 316 131

## Beschreibung

Die Erfindung betrifft ein Steckverbindergehäuse für einen Steckverbinder, aufweisend einen aus einem Kunststoff ausgebildeten Grundkörper, eine Rasteinrichtung zur mechanischen Verbindung mit einer korrespondierenden Gegenrasteinrichtung eines Gegensteckverbinders, sowie ein erstes Schutzelement und ein zweites Schutzelement für die Rasteinrichtung, gemäß dem Oberbegriff des Anspruchs 1.

Die Erfindung betrifft außerdem ein Steckverbindergehäuse für einen Steckverbinder, aufweisend einen aus einem Kunststoff ausgebildeten Grundkörper, eine Rasteinrichtung zur mechanischen Verbindung mit einer korrespondierenden Gegenrasteinrichtung eines Gegensteckverbinders, sowie einen Schutzbügel für die Rasteinrichtung, gemäß dem Oberbegriff des Anspruchs 11.

Die Erfindung betrifft ferner ein Spritzgießverfahren und eine Spritzgießvorrichtung zur Herstellung eines Steckverbindergehäuses für einen Steckverbinder.

Aus der Elektrotechnik sind diverse optische und elektrische Steckverbinder bekannt. Steckverbinder dienen bekanntermaßen dazu, Versorgungssignale und/oder Datensignale an korrespondierende Gegensteckverbinder zu übertragen. Bei einem Steckverbinder bzw. Gegensteckverbinder kann es sich um einen Stecker, einen Leiterplattenstecker, einen Einbaustecker, eine Buchse, eine Kupplung oder einen Adapter handeln. Die im Rahmen der Erfindung verwendete Bezeichnung "Steckverbinder" bzw. "Gegensteckverbinder" steht stellvertretend für alle Varianten.

Eine Steckverbindung zwischen Steckverbinder und Gegensteckverbinder kann grundsätzlich durch verschiedene mechanische Verbindungstechniken zusammengehalten werden. Eine typischerweise eingesetzte Verbindungstechnik ist die Verrastung zwischen dem Steckverbinder und dem Gegensteckverbinder. Hierzu können beispielsweise außenseitig am Steckverbindergehäuse ein elastisches Rastelement und außenseitig am Gegensteckverbindergehäuse ein korrespondierendes Gegenrastelement ausgebildet sein.

An die Robustheit und Sicherheit von Steckverbindern werden mitunter sehr hohe Anforderungen gestellt. So muss eine Steckverbindung im Zweifel hohen mechanischen Belastungen standhalten sowie definiert geschlossen bleiben, so dass die elektrische Verbindung nicht unbeabsichtigt getrennt wird. Vor diesen Hintergrund gilt es insbesondere auch sicherzustellen, dass die beteiligte Rasteinrichtung des Steckverbinders gegen eine Beschädigung geschützt ist, insbesondere während der Herstellung, dem Transport, der Montage und/oder der späteren Verwendung des Steckverbinders bzw. des Steckverbindergehäuses.

Zum Schutz einer Rasteinrichtung sind mechanische Schutzelemente bekannt, die neben und/oder oberhalb der Rasteinrichtung auf dem Steckverbindergehäuse angeordnet werden, beispielsweise in der Art von Schutzwänden oder Schutzbügeln, wie beispielsweise in der US 2012/0282791 A1, der US 2004/0248453 A1 oder der US 2018/0316131 A1 gezeigt. Diese Schutzelemente vermögen die Zugänglichkeit zu der Rasteinrichtung definiert einzuschränken bzw. zu blockieren, was die Wahrscheinlichkeit einer mechanischen Beschädigung reduziert. Gleichzeitig muss allerdings die Zugänglichkeit der Rasteinrichtung für einen Monteur und für die korrespondierende Gegenrasteinrichtung beibehalten werden.

Für die Herstellung von Steckverbindern gilt es in der Regel darauf zu achten, dass ein besonders wirtschaftlicher Fertigungsprozess zum Einsatz kommt, um die Steckverbinder im Rahmen einer Massenfertigung kostengünstig herstellen zu können. Aus diesem Grunde eignet sich ein Spritzgießverfahren zur Herstellung von Kunststoffkomponenten des Steckverbindergehäuses besonders vorteilhaft.

Insofern zur Herstellung des Steckverbindergehäuses allerdings ein Spritzgießverfahren zur Anwendung kommen soll, ist die Designfreiheit des Steckverbindergehäuses eingeschränkt, denn durch die seitlich und/oder oberhalb der Rasteinrichtungen angeordneten Schutzelemente und auch durch die Rasteinrichtung selbst können Hinterschneidungen entstehen. Ein Spritzgießverfahren kann daher mitunter nicht für alle Gestaltungsvarianten und Kombinationen aus Rasteinrichtungen und Schutzelementen zur Anwendung kommen oder nur durch hochkomplexe Spritzgießwerkzeuge und Entformungsabläufe realisiert werden. Häufig müssen daher Kompromisse bei der Gestaltung der Rasteinrichtung und/oder bei den Schutzelementen eingegangen werden, um eine kostengünstige Herstellung mittels Spritzgießen überhaupt erst zu ermöglichen.

In Anbetracht des bekannten Stands der Technik besteht die Aufgabe der vorliegenden Erfindung darin, ein Steckverbindergehäuse für einen Steckverbinder bereitzustellen, das eine besonders gut geschützte und vorzugsweise robuste Rasteinrichtung aufweist, und das vorzugsweise dennoch kostengünstig im Rahmen eines Spritzgießverfahrens herstellbar sein kann.

Der vorliegenden Erfindung liegt auch die Aufgabe zugrunde, ein Spritzgießverfahren und eine Spritzgießvorrichtung zur Herstellung eines Steckverbindergehäuses bereitzustellen, das eine besonders gut geschützte und vorzugsweise robuste Rasteinrichtung aufweist.

Die Aufgabe wird für das Steckverbindergehäuse mit den in Anspruch 1 oder 11 aufgeführten Merkmalen gelöst. Hinsichtlich des Spritzgießverfahrens wird die Aufgabe durch die Merkmale des Anspruchs 12 und betreffend die Spritzgießvorrichtung durch Anspruch 15 gelöst.

Die abhängigen Ansprüche und die nachfolgend beschriebenen Merkmale betreffen vorteilhafte Ausführungsformen und Varianten der Erfindung.

Es ist ein Steckverbindergehäuse für einen Steckverbinder vorgesehen, aufweisend einen aus einem Kunststoff ausgebildeten Grundkörper.

Bei dem Steckverbinder im Rahmen der Erfindung kann es sich vorzugsweise um einen elektrischen Steckverbinder, gegebenenfalls aber auch um einen optischen Steckverbinder handeln. Zur Vereinfachung wird die Erfindung nachfolgend im Wesentlichen anhand der Verwendung des Steckverbindergehäuses für einen elektrischen Steckverbinder beschrieben. Dies ist allerdings nicht einschränkend zu verstehen.

Vorzugsweise ist der Grundkörper einteilig aus dem Kunststoff ausgebildet, insbesondere mittels eines Spritzgießverfahrens. Als Kunststoffe kommen vorzugsweise Thermoplaste, Duroplaste und/oder Elastomere in Frage.

Der Grundkörper kann eine oder mehrere sich entlang seiner Längsachse durch den Grundkörper erstreckende Aufnahmen für weitere Steckverbinderkomponenten des Steckverbinders aufweisen, um beispielsweise Kontaktelemente, Schirmungsbauteile, Stützhülsen und/oder Dielektrika aufzunehmen.

Der Grundkörper kann außerdem auch einen oder mehrere mantelseitig und/oder stirnseitig angeordnete Befestigungsabschnitte zur Befestigung von Steckverbinderkomponenten aufweisen, um beispielsweise weitere Gehäusekomponenten des Steckverbinders an dem Grundkörper zu befestigen, um insgesamt ein mehrteiliges Steckverbindergehäuse bereitzustellen. Das Steckverbindergehäuse kann daher ausschließlich den Grundkörper und die nachfolgend als einteilig mit dem Grundkörper beschriebenen Komponenten, gegebenenfalls aber auch noch weitere Gehäusekomponenten des Steckverbinders aufweisen (z. B. weitere Kunststoffkomponenten oder auch metallische Komponenten, wie Schirmungselemente etc.).

Vorzugsweise ist der Grundkörper als vornehmlich längliches Bauteil ausgebildet. Der Grundkörper kann allerdings auch winklig ausgebildet sein, beispielsweise zur Verwendung mit einem gewinkelten Steckverbinder.

Der Grundkörper weist vorzugsweise ein steckerseitiges Ende auf, das zur Verbindung mit dem Gegensteckverbinder vorgesehen ist und daher beispielsweise ein Steckinterface aufweisen kann, insbesondere ein mechanisch und/oder magnetisch kodiertes Steckinterface zur Sicherstellung, dass die Verbindung mit dem Gegensteckverbinder nur in einer vorgesehenen Orientierung, Ausrichtung und/oder nur mit einem vorgesehenen Gegensteckverbinder erfolgen kann.

Vorzugsweise weist der Grundkörper außerdem ein von dem steckerseitigen Ende abgewandtes, abgangsseitiges Ende auf, das zur Verbindung mit einem elektrischen oder optischen Kabel (in diesem Sinne also ein kabelseitiges Ende), gegebenenfalls aber auch mit einer sonstigen elektrischen oder optischen Zuleitung, wie einer elektrischen Leiterbahn einer Leiterplatte (in diesem Sinne also ein leiterplattenseitiges Ende), vorgesehen sein kann.

Erfindungsgemäß weist das Steckverbindergehäuse eine Rasteinrichtung zur mechanischen Verbindung mit einer korrespondierenden Gegenrasteinrichtung eines Gegensteckverbinders (insbesondere einer korrespondierenden Gegenrasteinrichtung eines Gegensteckverbindergehäuses des Gegensteckverbinders) auf. Die Rasteinrichtung erstreckt sich vorzugsweise zumindest abschnittsweise entlang der Längsachse bzw. parallel zu der Längsachse des Grundkörpers. Die Rasteinrichtung weist einen ersten Verbindungsabschnitt auf, über den die Rasteinrichtung einteilig mit dem Grundkörper verbunden ist. Zwischen der Rasteinrichtung und dem Grundkörper ist zumindest abschnittsweise ein Freiraum gebildet, der sich entlang einer Längsachse auf dem Grundkörper erstreckt.

Mittels der Rasteinrichtung und der korrespondierenden Gegenrasteinrichtung kann somit eine Rastverbindung zwischen dem Steckverbinder und dem Gegensteckverbinder zur Sicherung der geschlossenen Steckverbindung hergestellt werden. Vorzugsweise ist die Rastverbindung zwischen der Rasteinrichtung und der Gegenrasteinrichtung bedarfsweise lösbar. Die Rastverbindung kann gegebenenfalls aber auch unlösbar ausgebildet sein, so dass sich eine einmal geschlossene Steckverbindung nicht mehr zerstörungsfrei trennen bzw. öffnen lässt.

Vorzugsweise ist die Rasteinrichtung und/oder die Gegenrasteinrichtung zumindest abschnittsweise elastisch ausgebildet, um die Verrastung bzw. um ein Einschnappen zu ermöglichen. Entsprechende Rasteinrichtungen und Gegenrasteinrichtungen sind grundsätzlich bekannt.

Bei der Rasteinrichtung handelt es sich vorzugsweise um ein im Wesentlichen längliches Bauteil, das zumindest über den ersten Verbindungsabschnitt mit dem Grundkörper verbunden ist, wobei der erste Verbindungsabschnitt vorzugsweise an einem der beiden Enden der Rasteinrichtung angeordnet ist, beispielsweise an dem Ende der Rasteinrichtung, das dem steckerseitigen Ende des Steckverbindergehäuses zugewandt ist. Der erste Verbindungsabschnitt kann allerdings auch an dem Ende der Rasteinrichtung angeordnet sein, das dem abgangsseitigen Ende des Steckverbinders zugewandt ist, oder in einem mittleren Abschnitt der Rasteinrichtung, zwischen den beiden Enden der Rasteinrichtung.

Der erste Verbindungsabschnitt (und gegebenenfalls auch der nachfolgend noch genannte zweite Verbindungsabschnitt) erhebt sich vorzugsweise in der Art eines Stegs aus dem Grundkörper und ist zu der restlichen, vornehmlich länglichen Rasteinrichtung vorzugsweise winkling (insbesondere orthogonal) ausgebildet. Die Rasteinrichtung ist vorzugsweise an einer äußeren Oberfläche des Grundkörpers ausgebildet. Die Rasteinrichtung erstreckt sich ausgehend von dem ersten Verbindungsabschnitt und/oder von dem zweiten Verbindungsabschnitt entlang der Längsachse des Freiraums bevorzugt parallel zu der der Rasteinrichtung zugewandten äußeren Oberfläche des Grundkörpers.

Erfindungsgemäß weist das Steckverbindergehäuse außerdem ein erstes Schutzelement und ein zweites Schutzelement auf. Das erste Schutzelement ist vorzugsweise, aber nicht notwendigerweise, an einer ersten Seite des Grundkörpers und das zweite Schutzelement ist vorzugsweise, aber nicht notwendigerweise, an einer der ersten Sete gegenüberliegenden, zweiten Seite des Grundkörpers angeordnet.

Die beiden Schutzelemente sind vorzugsweise an einer Längsfläche des Grundkörpers ausgebildet, an der auch die Rasteinrichtung ausgebildet ist (nachfolgend auch als "Basisfläche" bezeichnet). Denkbar ist aber auch, dass die beiden Schutzelemente jeweils an einer der beiden gegenüberliegenden Längsflächen des Grundkörpers ausgebildet sind, die sich jeweils an die Längsfläche bzw. Basisfläche anschließen, an der die Rasteinrichtung ausgebildet ist. Auch eine Kombination, wonach eines der Schutzelemente an der Basisfläche und das andere Schutzelement an der Längsfläche des Grundkörpers ausgebildet ist, ist möglich.

Erfindungsgemäß erstrecken sich die Schutzelemente jeweils einteilig ausgehend von dem Grundkörper, so dass die Rasteinrichtung zwischen den Schutzelementen angeordnet ist, wobei jedes der Schutzelemente den zwischen der Rasteinrichtung und dem Grundkörper ausgebildeten Freiraum in zumindest einem Verdeckungsbereich in einer Querrichtung quer zu der Längsachse verdeckt.

Der Verdeckungsbereich erstreckt sich vorzugsweise entlang der Längsachse des Freiraums, besonders bevorzugt parallel zu der Längsachse des Freiraums.

Die Querrichtung ist vorzugsweise orthogonal zu der Längsachse des Freiraums ausgerichtet, kann gegebenenfalls aber einen von 90° abweichenden Winkel mit der Längsachse des Freiraums einschließen.

Die Schutzelemente ragen vorzugsweise als Erhebungen aus dem Grundkörper heraus, beispielsweise als Schutzwände, Schutzstege und/oder Schutzstifte wie dies nachfolgend noch beschrieben wird. Die Schutzelemente können beispielsweise als längliche, rippenförmige Erhebungen oder Schutzwände mit einer Längserstreckung in Richtung der Längsachse des Freiraums ausgebildet sein.

Die beiden Schutzelemente vermögen die dazwischen angeordnete Rasteinrichtung in der genannten Querrichtung zu verdecken. Die Verdeckung des Freiraums und der Rasteinrichtung kann in axialer Richtung und in einer zu der axialen Richtung orthogonalen Richtung jeweils vollständig durch die beiden Schutzelemente erfolgen. Aus unterschiedlichen technischen Gründen ist die Rasteinrichtung in axialer Richtung und/oder in einer zu der axialen Richtung orthogonalen Richtung vorzugsweise jeweils nur teilweise verdeckt.

Die beiden Schutzelemente verlaufen vorzugsweise an den beiden Längskanten bzw. den beiden Längsrändern der Längsfläche bzw. Basisfläche des Grundkörpers, an der auch die Rasteinrichtung ausgebildet ist. Die beiden Schutzelemente können auf dieser Längsfläche des Grundkörpers auch enger oder breiter als die seitliche Erstreckung des Grundkörpers zueinander beabstandet angeordnet sein.

Um die Beweglichkeit der Rasteinrichtung zu optimieren, ist vorzugsweise zwischen der Rasteinrichtung und den beiden Schutzelementen jeweils ein Spalt vorgesehen. An dieser Stelle sei erwähnt, dass unter dem Begriff "verdecken" im Rahmen der vorliegenden Erfindung vorzugsweise keine Bedeckung zu verstehen ist.

Die Schutzelemente sind ausgebildet, um zumindest abschnittsweise einen mechanischen Schutz für die zwischen den Schutzelementen angeordnete Rasteinrichtung bereitzustellen, insbesondere ausgehend von der jeweiligen Seite, auf der sich das Schutzelements auf dem Grundkörper befindet, und optional auch von oberhalb der Rasteinrichtung, mittels des nachfolgend noch genannten Schutzbügels. Die Schutzelemente verdecken hierzu vorzugsweise zumindest den Freiraum, vorzugsweise allerdings auch zumindest teilweise oder vollständig die Rasteinrichtung selbst, und blockieren dadurch zumindest in den verdeckten Abschnitten eine unerwünschte mechanische Zugänglichkeit zu der Rasteinrichtung. Eine mechanische Einflussnahme, ausgehend von einer der beiden Seiten des Grundkörpers, die zu einer Beschädigung oder gar Zerstörung der Rasteinrichtung führen kann, kann daher ausgeschlossen oder das Risiko hierfür zumindest ausreichend reduziert werden.

Die Schutzelement sind vorzugsweise parallel oder entlang der Längsachse des Freiraums derart angeordnet, dass die Rasteinrichtung zumindest in besonders gefährdeten und/oder empfindlichen Bereichen mechanisch geschützt wird, beispielsweise im Bereich eines frei schwingenden Endes der Rasteinrichtung und/oder in einem Mittelbereich zwischen zwei angebundenen Enden der Rasteinrichtung.

Erfindungsgemäß ist vorgesehen, dass jedes der Schutzelemente außerdem zumindest einen Zugangsbereich ausbildet, durch den der Freiraum entlang der Querrichtung zugänglich ist, wobei jedem der Verdeckungsbereiche einer der Zugangsbereiche des jeweils anderen Schutzelements entlang der Querrichtung gegenüberliegt.

Der Zugangsbereich erstreckt sich vorzugsweise entlang der Längsachse des Freiraums, besonders bevorzugt parallel zu der Längsachse des Freiraums.

Vorzugsweise erstreckt sich der einem jeweiligen Verdeckungsbereich gegenüberliegende Zugangsbereich zumindest entlang der gesamten axialen Erstreckung des zugeordneten Verdeckungsbereichs und/oder der Quererstreckung quer zu der axialen Erstreckung des Verdeckungsbereichs.

Es kann vorgesehen sein, dass die Schutzelemente derart ausgebildet und auf dem Grundkörper positioniert sind, dass die Verdeckungsbereiche des Freiraums, die durch eines der Schutzelemente verdeckt sind, ausgehend von der gegenüberliegenden Seite, auf der das jeweils andere Schutzelement positioniert ist, zugänglich sind.

Es kann vorgesehen sein, dass Verdeckungsbereiche des Freiraums, die durch eines der Schutzelemente verdeckt sind, ausgehend von dem jeweils anderen Schutzelement zugänglich sind.

Die Schutzelemente können derart auf dem Grundkörper ausgebildet sein, dass jeder Verdeckungsbereich, der durch das erste Schutzelement verdeckt ist, jeweils zu jedem Verdeckungsbereich, der durch das zweite Schutzelement verdeckt ist, verschieden bzw. unterschiedlich ist.

Erfindungsgemäß kann sichergestellt sein, dass der Freiraum stets von zumindest einer der beiden Seiten des Grundkörpers zugänglich ist bzw. von der ersten Seite des Grundkörpers und/oder von der zweiten Seite des Grundkörpers zugänglich ist. Abschnitte, die von der ersten Seite des Grundkörpers aufgrund des ersten Schutzelements unzugänglich sind, sind daher ausgehend von der zweiten Seite des Grundkörpers, an der das zweite Schutzelement angeordnet ist, zugänglich - und umgekehrt.

Der Freiraum zwischen der Rasteinrichtung und dem Grundkörper ist somit entlang seiner Längsachse vorzugsweise in keinem Abschnitt gleichermaßen von beiden Seiten verdeckt, das heißt die Verdeckungsbereiche der Schutzelemente überlappen sich entlang der Längsachse des Freiraums vorzugsweise nicht.

Auf diese Weise kann die Herstellung des Steckverbindergehäuses deutlich vereinfacht sein, bei gleichzeitig hoher Schutzwirkung der Schutzelemente insgesamt.

Beispielsweise kann es im Rahmen eines Herstellungsverfahrens des Steckverbindergehäuses möglich sein, den Freiraum durch Abtragen bzw. subtraktive Bearbeitung nur ausgehend von den Seiten zu erzeugen. Besonders bevorzugt kann allerdings vorgesehen sein, das Steckverbindergehäuse im Rahmen eines Spritzgießverfahrens durch Spritzgießwerkzeuge herzustellen, mit denen eine seitliche Entformung des Freiraums, vorzugsweise durch die Zugangsbereiche hindurch, erfolgt.

Der Designspielraum für das Steckverbindergehäuse, insbesondere für vorteilhafte Kombinationen aus Rasteinrichtungen und Schutzelementen, kann gegenüber dem Stand der Technik deutlich verbessert sein.

An dieser Stelle sei erwähnt, dass gegebenenfalls auch mehrere erste Schutzelemente und mehrere zweite Schutzelemente vorgesehen sein können, wobei in diesem Fall darauf zu achten wäre, dass die Verdeckungsbereiche des Freiraums, die durch alle ersten Schutzelemente gemeinsam verdeckt sind, ausgehend von der gegenüberliegenden Seite, auf der die zweiten Schutzelemente positioniert ist, zugänglich sind - und umgekehrt.

In einer vorteilhaften Weiterbildung der Erfindung kann vorgesehen sein, dass die Rasteinrichtung einen entlang der Längsachse des Freiraums verlaufenden elastischen Federarm aufweist, auf dem ein Rastelement angeordnet ist. Die Rasteinrichtung kann daher in der Art einer "Rastwippe" ausgebildet sein.

Bei dem Rastelement handelt es sich vorzugsweise um einen Rasthaken. Der Rasthaken kann ausgebildet sein, um eine Rastverbindung mit einem korrespondierenden Gegenrastelement der Gegenrasteinrichtung des Gegensteckverbinders einzugehen, beispielsweise hinter einer Kante, in einer Nut oder in einer Ausnehmung der Gegenrasteinrichtung einzurasten. Bei dem Rastelement kann es sich beispielsweise aber auch um eine Kante, eine Nut oder eine Ausnehmung in dem Federarm handeln, in die ein korrespondierender Rasthaken der Gegenrasteinrichtung des Gegensteckverbinders einzurasten vermag. Grundsätzlich kann ein Rastelement beliebigen Typs vorgesehen sein, um eine lösbare oder unlösbare Rastverbindung mit dem Gegenrastelement des Gegensteckverbinders zu ermöglichen.

Vorzugsweise ist der Freiraum zumindest zwischen dem Rastelement der Rasteinrichtung und dem Grundkörper angeordnet, um ausgehend von einem Grundzustand des Federarms eine Auslenkung des Rastelements (entgegen der Rückstellkraft des Federarms) in Richtung auf den Grundkörper zu ermöglichen.

Ein auf einem Federarm angeordnetes Rastelement kann zu einer besonders einfach bedienbaren Rasteinrichtung durch den Monteur führen. Ferner kann durch die axiale Erstreckung des Federarms eine ausreichende Elastizität und ein ausreichender Hub zur Bereitstellung der Rastverbindung selbst dann bereitgestellt werden, wenn das Steckverbindergehäuse vergleichsweise klein ausgebildet ist.

Die Erfindung eignet sich besonders vorteilhaft zur Verwendung mit einer Rasteinrichtung, die einen elastischen Federarm mit einem Rastelement aufweist, da derartige "Rastwippen" einerseits besonders anfällig gegenüber mechanischen Beschädigungen sein können, insbesondere gegenüber mechanischen Beschädigungen ausgehend von den Seiten des Grundkörpers, und da die Rastwippen außerdem in der Regel einen vergleichsweise komplexen Aufbau mit zusätzlichen Hinterschneidungen aufweisen.

Der Federarm kann eine Betätigungsfläche aufweisen, die von einem Monteur für eine gezielte Auslenkung des Rastelements betätigt werden kann, um das Rastelement entgegen einer Rückstellkraft des Federarms in Richtung auf den Grundkörper auszulenken, um die Rastverbindung mit dem Gegensteckverbinder herzustellen oder zu trennen.

Gemäß einer Weiterbildung der Erfindung kann vorgesehen sein, dass der Federarm an einem ersten Ende über den ersten Verbindungsabschnitt mit dem Grundkörper und außerdem an einem von dem ersten Ende abgewandten, zweiten Ende über einen zweiten Verbindungsabschnitt einteilig mit dem Grundkörper verbunden ist.

Vorzugsweise erstreckt sich der Freiraum entlang der Längsachse über die gesamte Länge bzw. Erstreckung des Federarms zwischen den beiden Verbindungsabschnitten.

Die Rasteinrichtung kann also federarmförmig ausgeformt und mit einem Ende oder mit beiden Enden an dem Steckverbindergehäuse bzw. an dem Grundkörper angebunden sein. Auch eine mittige Anbindung der Rasteinrichtung bzw. des Federarms kann allerdings vorgesehen sein, wie vorstehend bereits erwähnt.

Ein besonders großer Hub für die Rastverbindung kann in der Regel durch einen einseitig an den Grundkörper angebundenen Federarm realisiert werden. Eine derartige Rastverbindung ist allerdings auch anfälliger gegenüber äußeren Einflüssen, wie beispielsweise Vibrationen oder sonstigen Kräften. Um die Robustheit und Sicherheit der Steckverbindung weiter zu erhöhen, kann daher vorzugsweise ein beidseitig an den Grundkörper angebundener Federarm vorgesehen sein. In dem mittleren Abschnitt zwischen den beiden Enden bzw. zwischen den beiden Verbindungsabschnitten kann dann das Rastelement, insbesondere der Rasthaken, ausgebildet sein. Die erforderliche Steckkraft zum Zusammenstecken des Steckverbinders mit dem Gegensteckverbinder kann hierdurch zwar erhöht, die Haltekraft allerdings ebenfalls deutlich verbessert sein. Die Entscheidung, ob eine einseitige oder beidseitige Anbindung des Federarms bzw. der Rasteinrichtung vorgesehen ist, kann der Fachmann anwendungsbedingt treffen.

Die Erfindung eignet sich ganz besonders vorteilhaft zur Verwendung mit einer beidseitig angebundenen Rasteinrichtung bzw. mit einem beidseitig angebundenen Federarm, da hierdurch eine weitere Hinterschneidung entsteht und eine Zugänglichkeit des Freiraums zwischen den beiden Verbindungsabschnitten ausschließlich von den Seiten, also quer zu der Längsachse des Freiraums (in Querrichtung) möglich ist. Eine einteilige Herstellung, insbesondere im Rahmen eines Spritzgießverfahrens, ist daher nur durch die vorgeschlagene Anordnung und Ausgestaltung der Schutzelemente möglich, insofern auf die Schutzelemente nicht verzichtet oder deren Schutzwirkung reduziert werden soll.

Gemäß einer Ausgestaltung der Erfindung kann vorgesehen sein, dass der Grundkörper eine die erste Seite mit der zweiten Seite verbindende (äußere) Basisfläche aufweist.

Es kann vorgesehen sein, dass sich die Schutzelemente und/oder die Verbindungsabschnitte ausgehend von der Basisfläche erstrecken, und sich insbesondere orthogonal oder zumindest im Wesentlichen orthogonal aus der Basisfläche erheben.

Die Schutzelemente können an der jeweiligen Seite des Grundkörpers an den Rand bzw. an die Kante der Basisfläche unmittelbar angrenzen und somit eine Verlängerung der Seitenfläche der jeweiligen Seite ausbilden. Auch ein Versatz zu dem Rand bzw. zu den Seitenflächen auf der Basisfläche kann allerdings vorgesehen sein. Die Verbindungsabschnitte können an einer steckerseitigen Stirnseite des Grundkörpers oder an einer abgangsseitigen Stirnseite des Grundkörpers an den Rand bzw. an die Kante der Basisfläche unmittelbar angrenzen und somit eine Verlängerung der jeweiligen Stirnfläche des Grundkörpers ausbilden. Auch ein Versatz zu dem Rand bzw. zu den Stirnflächen auf der Basisfläche kann allerdings vorgesehen sein.

Es kann auch vorgesehen sein, dass die Schutzelemente unmittelbar mit einer jeweiligen Seitenfläche der zugeordneten Seite des Grundkörpers verbunden sind und/oder dass die Verbindungsabschnitte mit der jeweiligen Stirnfläche des Grundkörpers verbunden sind.

Vorzugsweise befindet sich der Freiraum zwischen der Rasteinrichtung und der Basisfläche des Grundkörpers. Die Rasteinrichtung verläuft mit einer der Basisfläche zugewandten Fläche vorzugsweise parallel zu der Basisfläche.

Gemäß einer besonders bevorzugten Weiterbildung der Erfindung kann vorgesehen sein, dass zumindest einer der Verdeckungsbereiche eines der Schutzelemente, vorzugsweise alle Verdeckungsbereiche aller Schutzelemente, zusätzlich zu dem Freiraum auch die Rasteinrichtung in der Querrichtung zumindest bereichsweise verdeckt, vorzugsweise parallel zu der Längsachse des Freiraums. Auf diese Weise kann ein besonders guter Schutz für die Rasteinrichtung bereitgestellt werden. Es kann grundsätzlich aber bereits ausreichend sein, nur den seitlichen Zugang zu dem Freiraum unterhalb der Rasteinrichtung zu schützen bzw. zu verdecken.

Grundsätzlich kann vorgesehen sein, dass die Schutzelemente die Rasteinrichtung vollständig entlang der Längsachse seitlich abwechselnd verdecken. In einer bevorzugten Weiterbildung der Erfindung kann allerdings vorgesehen sein, dass die Schutzelemente die Rasteinrichtung in einem von einem steckerseitigen Ende ausgehenden, vorderen axialen Endabschnitt in Querrichtung bzw. zumindest seitlich nicht verdecken und/oder in einem von einem abgangsseitigen Ende ausgehenden, hinteren axialen Endabschnitt in Querrichtung bzw. zumindest seitlich nicht verdecken.

Vorzugsweise sind die Schutzelemente nicht im Bereich des steckerseitigen Endes bzw. des vorderen axialen Endabschnitts angeordnet oder weisen in dem vorderen axialen Endabschnitt entsprechende Zugangsbereiche auf, um eine optimale Zugänglichkeit des Steckinterfaces zur Verbindung mit dem Gegensteckverbinder bereitzustellen bzw. um den Designspielraum des Steckinterfaces zu erhöhen.

In einer Weiterbildung der Erfindung kann vorgesehen sein, dass die Schutzelemente entlang der Längsachse des Freiraums verlaufende jeweilige Erhebungen aufweisen (vorzugsweise parallel zu der Längsachse des Freiraums und/oder parallel zu den gegenüberliegenden Erhebungen des jeweils anderen Schutzelements), um einen jeweiligen Verdeckungsbereich auszubilden.

Das erste Schutzelement kann entlang oder parallel zu der Längsachse des Freiraums also eine oder mehrere Erhebungen aufweisen (vorzugsweise genau eine Erhebung) und das zweite Schutzelement kann entlang oder parallel zu der Längsachse des Freiraums eine oder mehrere Erhebungen aufweisen (vorzugsweise genau eine Erhebung).

Vorzugsweise kann außerdem vorgesehen sein, dass die Schutzelemente entlang der Längsachse des Freiraums verlaufende, erhebungsfreie Bereiche (also axiale Abschnitte ohne eine Erhebung) aufweisen, um einen jeweiligen Zugangsbereich auszubilden (insbesondere parallel zu der Längsachse des Freiraums verlaufende erhebungsfreie Bereiche).

Beispielsweise kann also vorgesehen sein, dass die Erhebung (oder die Erhebungen) des ersten Schutzelements entlang der Längsachse des Freiraums, insbesondere parallel zu der Längsachse des Freiraums, derart zu der Erhebung (oder den Erhebungen) des zweiten Schutzelements versetzt positioniert ist (bzw. sind), dass die durch die Erhebung (oder die Erhebungen) eines der Schutzelemente verdeckten Verdeckungsbereiche des Freiraums ausgehend von der gegenüberliegenden Seite, auf der das jeweils andere Schutzelement positioniert ist, zugänglich sind (jeweils entlang zu der Querrichtung).

Somit kann beispielsweise ein dem abgangsseitigen Ende zugewandter, hinterer Endabschnitt der Rasteinrichtung (insbesondere ein zusammenhängender Abschnitt) von dem ersten Schutzelement und ein in Richtung des steckerseitigen Endes weiter vorne liegender Abschnitt der Rasteinrichtung (insbesondere ein zusammenhängender, unmittelbar an den hinteren Endabschnitt angrenzender Abschnitt) von dem zweiten Schutzelement seitlich geschützt sein - oder umgekehrt.

Wie bereits erwähnt, können auch mehrere Erhebungen vorgesehen sein, beispielsweise zwei, drei, vier, fünf oder noch mehr Erhebungen pro Schutzelement, wobei die Schutzelemente auch nicht dieselbe Anzahl Erhebungen aufweisen müssen.

In einer vorteilhaften Weiterbildung der Erfindung kann außerdem vorgesehen sein, dass zumindest eine der Erhebungen wenigstens eine Ausnehmung aufweist (insbesondere eine sich entlang der Längsachse des Freiraums erstreckende Ausnehmung), um einen der Zugangsbereiche auszubilden.

Grundsätzlich können in Erhebungen ausgebildete Ausnehmungen zur Bereitstellung des Zugangsbereichs zu dem Freiraum einen besseren Schutz für die Rasteinrichtung bereitstellen als ein vollständig erhebungsfreier Bereich, da auf diese Weise vorzugsweise ein Zugang auch ausschließlich auf den Freiraum begrenzt sein kann. Die Rasteinrichtung kann dann weiterhin vollständig geschützt bzw. verdeckt bleiben. Es sei allerdings betont, dass die Ausnehmungen grundsätzlich alternativ, gegebenenfalls aber auch zusätzlich zu den genannten erhebungsfreien Bereichen vorgesehen sein können.

Jede Erhebung kann gegebenenfalls auch mehrere Ausnehmungen aufweisen, beispielsweise zwei, drei, vier oder noch mehr Ausnehmungen.

Die Ausnehmungen der sich gegenüberliegenden Schutzelemente können sich entlang der Längsachse des Freiraums gegebenenfalls auch überlappen. Auf diese Weise können Abschnitte des Freiraums sogar ausgehend von beiden Seiten zugänglich gemacht werden.

Gemäß einer Weiterbildung der Erfindung kann vorgesehen sein, dass wenigstens eine der Erhebungen als Schutzwand oder Schutzsteg ausgebildet ist.

Vorzugsweise sind Schutzwände vorgesehen, insbesondere genau eine Schutzwand pro Schutzelement. Die Verwendung von Schutzstegen kann aber ebenfalls zu einem vorteilhaften seitlichen Schutz der Rasteinrichtung führen. Die Schutzstege können sich beispielsweise in der Art von Zinnen oder Zähnen entlang der Längsachse des Freiraums (insbesondere parallel zu der Längsachse des Freiraums) auf dem Grundkörper verteilen.

Alternativ zu Schutzwänden oder Schutzstegen können auch Schutzrippen, Schutzstäbe oder Schutzstifte vorgesehen sein, die sich seitlich neben der Rasteinrichtung aus dem Grundkörper erheben und entlang der Längsachse des Freiraums (insbesondere parallel zu der Längsachse des Freiraums) entsprechend verteilt sind, so dass der Freiraum in jedem Abschnitt entlang der Längsachse des Freiraums zumindest von einer Seite des Grundkörpers zugänglich ist.

In einer bevorzugten Weiterbildung der Erfindung kann vorgesehen sein, dass wenigstens eine der Ausnehmungen als Fenster, Einbuchtung oder Schlitz ausgebildet ist.

Eine Ausgestaltung der Schutzelemente mit Schutzwänden mit entsprechend zueinander positionierten Fenstern zur Ausbildung der Verdeckungsbereich-Zugangsbereich-Kombination kann eine besonders hohe Schutzwirkung für die Rasteinrichtung bereitstellen, bei gleichzeitig guter Zugänglichkeit des Freiraums und damit der Möglichkeit einer kostengünstigen Herstellung des Steckverbindergehäuses, insbesondere im Rahmen eines Spritzgießverfahrens.

In einer Weiterbildung der Erfindung kann vorgesehen sein, dass das Steckverbindergehäuse einen Schutzbügel aufweist, mit einem ersten Schenkel und mit einem zweiten Schenkel, wobei der erste Schenkel einteilig mit dem ersten Schutzelement und der zweite Schenkel einteilig mit dem zweiten Schutzelement verbunden ist. Die Schutzelemente können auch die Schenkel des Schutzbügels ausbilden; bei einem Schenkel des Schutzbügels und einem Schutzelement kann es sich daher auch um dieselbe funktionale Komponente handeln.

Vorzugsweise überbrückt der Schutzbügel die Rasteinrichtung für deren mechanischen Schutz. Hierzu kann sich der Schutzbügel insbesondere von dem ersten Schutzelement bis zu dem zweiten Schutzelement erstrecken.

Ein Schutzbügel kann vorteilhaft eine mechanische Beschädigung der Rasteinrichtung von oben, also in Richtung der Basisfläche des Grundkörpers, verhindern. Entsprechende Schutzbügel sind auch unter dem Begriff "Wippenbügel" bekannt. Vorzugsweise überbrückt der Schutzbügel die Rasteinrichtung im Bereich seiner höchsten Erhebung entlang der Längsachse.

Vorzugsweise ist genau ein Schutzbügel vorgesehen. Es können allerdings auch mehrere Schutzbügel vorgesehen sein, die entlang der Längsachse des Freiraums verteilt angeordnet sind, beispielsweise zwei, drei, vier, fünf oder noch mehr Schutzbügel.

Der Schutzbügel kann eine geschlossene Verbindung zwischen den beiden Schutzelementen bereitstellen, dies ist allerdings nicht zwingend erforderlich. Es können beispielsweise auch lediglich Halbbügel ausgehend von einem jeweiligen Schenkel bzw. einem jeweiligen Schutzelement vorgesehen sein, die gemeinsam den Schutzbügel ausbilden, allerdings nicht miteinander verbunden sind. Auch ein nur einseitig mit dem Grundkörper verbundener Schutzbügel kann vorgesehen sein - einer der Schenkel des Schutzbügels kann somit also auch von dem Grundkörper beabstandet sein, beispielsweise um den Zugangsbereich auszubilden.

Der Schutzbügel kann sich insbesondere ausgehend von als Seitenwänden oder Rippen ausgebildeten Schutzelementen, aber auch ausgehend von als Stegen oder Stiften ausgebildeten Schutzelementen erstrecken. Die Schenkel des Schutzbügels können auch bereits als solche das jeweilige Schutzelement ausbilden (beispielsweise einen Schutzsteg), wobei ein zusätzlicher Schutzsteg oder eine Schutzwand dann nicht mehr erforderlich sind.

In einer vorteilhaften Weiterbildung kann vorgesehen sein, dass die Schenkel des Schutzbügels entlang der Längsachse des Freiraums versetzt zueinander positioniert sind, insbesondere um sicherzustellen, dass die Schenkel den Freiraum nicht beidseitig verdecken.

Es kann allerdings auch vorgesehen sein, dass die Schenkel entlang der Längsachse des Freiraums nicht zueinander versetzt positioniert sind, insbesondere wenn sich die Schenkel ausgehend von Schutzelementen erstrecken bzw. auf Schutzelemente (insbesondere Schutzwände) aufgesetzt sind, die Ausnehmungen (z. B. Fenster) aufweisen, um die Zugänglichkeit des Freiraums zu gewährleisten.

Wenn die Schenkel des Schutzbügels zueinander versetzt angeordnet sind, folgt der Schutzbügel zwischen den beiden Schenkeln vorzugsweise einem kurvigen Verlauf (beispielsweise in der Art einer S-Kurve). Dies ist allerdings nicht unbedingt erforderlich - auch ein linearer oder stufiger Verlauf kann vorgesehen sein.

Die Erfindung betrifft im Rahmen des erfinderischen Gesamtkonzepts außerdem auch ein Steckverbindergehäuse für einen Steckverbinder, aufweisend
- einen aus einem Kunststoff ausgebildeten Grundkörper;
- eine Rasteinrichtung zur mechanischen Verbindung mit einer korrespondierenden Gegenrasteinrichtung eines Gegensteckverbinders, wobei die Rasteinrichtung einen ersten Verbindungsabschnitt aufweist, über den die Rasteinrichtung einteilig mit dem Grundkörper verbunden ist, wobei zwischen der Rasteinrichtung und dem Grundkörper zumindest abschnittsweise ein Freiraum gebildet ist, der sich entlang einer Längsachse auf dem Grundkörper erstreckt; und
- einen Schutzbügel, der einen ersten Schenkel und einen zweiten Schenkel aufweist, wobei sich zumindest einer der Schenkel einteilig ausgehend von dem Grundkörper erstreckt, und wobei die Rasteinrichtung zwischen den Schenkeln angeordnet und von dem Schutzbügel für deren mechanischen Schutz überbrückt ist, und wobei zumindest der Schenkel, der einteilig mit dem Grundkörper verbunden ist, den zwischen der Rasteinrichtung und dem Grundkörper ausgebildeten Freiraum in zumindest einem Verdeckungsbereich in einer Querrichtung quer zu der Längsachse verdeckt.

Der Verdeckungsbereich erstreckt sich vorzugsweise entlang der Längsachse des Freiraums, besonders bevorzugt parallel zu der Längsachse des Freiraums.

Das vorstehend genannte Steckverbindergehäuse (also das Steckverbindergehäuse gemäß Anspruch 11) wird nachfolgend aus Gründen der Unterscheidbarkeit von dem

Steckverbindergehäuse des Anspruchs 1 mitunter auch als "alternatives Steckverbindergehäuse" bezeichnet. Es sei jedoch betont, dass sich die vorstehenden und nachfolgenden Angaben in der Beschreibung, den Ansprüchen und den Figuren auf das Steckverbindergehäuse des Anspruchs 1 und auf das "alternative Steckverbindergehäuse" des Anspruch 11 gleichermaßen beziehen können, sofern nichts Gegenteiliges angegeben ist, dies gilt insbesondere (aber nicht ausschließlich) betreffend Merkmale und Vorteile des Grundkörpers, der Rasteinrichtung, des Freiraums und des Schutzbügels.

Betreffend das alternative Steckverbindergehäuse ist vorgesehen, dass
a) zumindest einer der Schenkel zumindest einen Zugangsbereich ausbildet, durch den der Freiraum entlang der Querrichtung zugänglich ist, wobei jedem der Verdeckungsbereiche einer der Zugangsbereiche des jeweils anderen Schenkels entlang der Querrichtung gegenüberliegt; und/oder
b) die Schenkel zueinander versetzt angeordnet sind, vorzugsweise axial entlang der Längsachse des Freiraums versetzt angeordnet sind, so dass der von einem der Schenkel in Querrichtung verdeckte Freiraum ausgehend von dem anderen Schenkel entlang der Querrichtung zugänglich ist.

Der Zugangsbereich erstreckt sich vorzugsweise entlang der Längsachse des Freiraums, besonders bevorzugt parallel zu der Längsachse des Freiraums.

Dieses alternative Steckverbindergehäuse stellt eine Alternativlösung für die einheitliche erfindungsgemäße Aufgabe dar, die vorliegend zweckmäßigerweise separat wiedergegeben wird. Die beiden Steckverbindergehäuse stehen dahingehend miteinander in Beziehung, dass sichergestellt ist, dass der Freiraum zwischen der Rasteinrichtung und dem Grundkörper parallel zu der Längsachse des Grundkörpers stets von zumindest einer Seite entlang der Querrichtung zugänglich ist, indem die zum Schutz der Rasteinrichtung vorgesehenen Strukturen entsprechend aufeinander abgestimmte Verdeckungsbereiche und Zugangsbereiche ausbilden. Das nachfolgend noch genannte Verfahren und die Vorrichtung können daher auch verwendet werden, um beide Steckverbindergehäuse vorteilhaft mittels des genannten Spritzgießprozesses herzustellen.

Die Erfindung betrifft auch ein Spritzgießverfahren zur Herstellung eines Steckverbindergehäuses für einen Steckverbinder, umfassend zumindest die folgenden Verfahrensschritte:
- Bereitstellen eines mehrteiligen Spritzgießwerkzeugs, das in seinem zusammengefügten Zustand eine Negativform für eines der vorstehend und nachfolgend genannten Steckverbindergehäuse ausbildet;
- Bewegen einer ersten Gussform des Spritzgießwerkzeugs entlang der Längsachse des Freiraums relativ zu dem Steckverbindergehäuse, um axiale Bereiche zwischen der Rasteinrichtung und den Schutzelementen zu entformen; und
- Bewegen einer zweiten Gussform und einer der zweiten Gussform gegenüberliegenden, dritten Gussform des Spritzgießwerkzeugs jeweils entlang der Querrichtung relativ zu dem Steckverbindergehäuse, um den Freiraum zwischen der Rasteinrichtung und dem Grundkörper durch die Zugangsbereiche hindurch zu entformen.

Auf vorteilhafte Weise kann die wesentliche Entformung des Steckverbindergehäuses, insbesondere die Entformung der Rasteinrichtung, vorliegend also in einer Richtung quer zur Längsachse des Freiraums, also in einer seitlichen Richtung, erfolgen. Das Entformungswerkzeug bzw. die Entformungsbereiche der jeweiligen Gussform können beispielsweise durch das vorstehend genannte Fenster oder eine sonstige Ausnehmung in der Schutzwand hindurchgeführt oder neben einer Schutzwand vorbeigeführt werden.

Unter dem Begriff "Entformen" wird im Rahmen des Spritzgießens bekanntermaßen das Herauslösen des zumindest bereits teilweise erstarrten Produkts aus der Gussform bzw. aus dem Spritzgießwerkzeug bezeichnet. Die Gussformen können hierzu von dem Produkt bzw. von dem Steckverbindergehäuse wegbewegt, und das Steckverbindergehäuse gegebenenfalls durch ein Auswerfmittel aus der Gussform ausgeworfen werden. Dieser Prozess kann bei entsprechend komplexen Formen außerordentlich aufwändig sein.

Durch das vorgeschlagene Verfahren kann hingegen auf besonders einfache Weise eine Entformung des Steckverbindergehäuses in Querrichtung bzw. von der ersten Seite und von der zweiten Seite des Grundkörpers ermöglicht werden, wobei gleichzeitig eine hohe Designfreiheit für das Steckverbindergehäuse beibehalten und beispielsweise ein Steckverbindergehäuse bereitgestellt werden kann, das einen beidseitig angebundenen Federarm aufweist mit gleichzeitig besonders gutem seitlichen und oberen mechanischem Schutz. Dadurch, dass eine Entformung in Querrichtung bzw. von den Seiten stattfinden kann, können besonders einfache Gussformen bzw. ein besonders einfaches Spritzgießwerkzeug bereitgestellt werden.

Mittels der ersten Gussform kann außerdem ein Bereich oberhalb der Rasteinrichtung und gegebenenfalls die optional in dem Grundkörper ausgebildete Ausnehmung für die Steckverbinderkomponenten entformt werden.

Mittels der zweiten und/oder dritten Gussform kann optional außerdem das steckerseitige Ende bzw. der vordere Endabschnitt oder ein abgangsseitiges Ende bzw. der hintere Endabschnitt des Grundkörpers einzig in Querrichtung bzw. ausgehend von der Seite entformt werden, sowie Abschnitte des jeweiligen Schutzelements (zum Beispiel dessen Fenster, Ausnehmungen, Freiräume zwischen einzelnen Stegen oder Schutzwänden, etc.) oder eines Schutzstegs. Insbesondere kann mittels der ersten und/oder zweiten Gussform ein vorderer Endabschnitt der Rasteinrichtung entformt werden.

In einer vorteilhaften Weiterbildung der Erfindung kann vorgesehen sein, dass die erste Gussform verwendet wird (vorzugsweise ausschließlich verwendet wird), um die axialen Bereiche zwischen der Rasteinrichtung und den Schutzelementen in einem von einem abgangsseitigen Ende ausgehenden, hinteren axialen Endabschnitt entlang der Längsachse des Freiraums zu entformen.

Eine Entformung des steckerseitigen Endes bzw. des vorderen Endabschnitts des Steckverbinders in Querrichtung bzw. von der Seite (im Gegensatz zu einer Entformung in Richtung der Längsachse des Freiraums) kann von Vorteil sei, da das Steckverbindergehäuse in diesem Fall auch an seinem steckerseitigen Ende weitere Hinterschneidungen aufweisen kann, beispielsweise durch einen Rasthaken und/oder ein mechanisches Kodierungsmittel. Vorzugsweise wird der von dem steckerseitigen Ende ausgehende, vordere Endabschnitt des Grundkörpers somit nicht von der ersten Gussform entformt. Dieser vordere axiale Endabschnitt wird vorzugsweise von der zweiten Gussform und/oder von der dritten Gussform von der Seite entformt.

Ferner kann vorgesehen sein, dass die erste Gussform verwendet wird (vorzugsweise ausschließlich verwendet wird), um die axialen Bereiche zwischen der Rasteinrichtung und den Schutzelementen in einem von einem steckerseitigen Ende ausgehenden, vorderen axialen Endabschnitt entlang der Längsachse des Freiraums zu entformen. Somit kann vorzugsweise auch vorgesehen sein, dass das abgangsseitige Ende bzw. der hintere Endabschnitt des Steckverbinders in Querrichtung bzw. von der Seite unter Verwendung der zweiten Gussform und/oder der dritten Gussform, und nicht der ersten Gussform entformt wird.

In einer Weiterbildung der Erfindung kann vorgesehen sein, dass die zweite Gussform und die dritte Gussform zeitsynchron bewegt werden, um den Freiraum gleichzeitig durch die Zugangsbereiche aller Schutzelemente, also gleichzeitig von beiden Seiten, zu entformen.

Vorzugsweise wird außerdem auch die erste Gussform zeitsynchron mit der zweiten Gussform und mit der dritten Gussform bewegt.

Durch die zeitsynchrone Bewegung mehrerer Gussformen kann die Prozesszeit verringert werden. Eine zeitsynchrone bzw. gleichzeitige Bewegung der Gussformen ist insbesondere daher möglich, da die vorgeschlagene Ausgestaltung des Steckverbindergehäuses die Anforderungen an das Spritzgießwerkzeug verringert und daher den Entformungsprozess vereinfacht.

Die Erfindung betrifft auch eine Spritzgießvorrichtung zur Herstellung eines Steckverbindergehäuses für einen Steckverbinder, aufweisend ein mehrteiliges Spritzgießwerkzeug, das in seinem zusammengefügten Zustand eine Negativform für eines der vorstehend und nachfolgend genannten Steckverbindergehäuse ausbildet, wobei eine erste Gussform des Spritzgießwerkzeugs zur Entformung des Steckverbindergehäuses entlang der Längsachse des Freiraums relativ zu dem Steckverbindergehäuse bewegbar ist, um axiale Bereiche zwischen der Rasteinrichtung und den Schutzelementen zu entformen, und wobei eine zweite Gussform und eine dritte Gussform des Spritzgießwerkzeugs zur Entformung des Steckverbindergehäuses jeweils entlang der Querrichtung relativ zu dem Steckverbindergehäuse bewegbar und sich gegenüberliegend angeordnet sind, um den Freiraum zwischen der Rasteinrichtung und dem Grundkörper durch die Zugangsbereiche hindurch zu entformen.

Das Spritzgießwerkzeug der vorgeschlagenen Spritzgießvorrichtung ist erfindungsgemäß besonders effizient und produktiv, da die Entformung erleichtert ist. Somit können weniger Werkzeugschieber erforderlich sein und die Designfreiheit zur Herstellung des Steckverbindergehäuses außerdem größer sein.

Die zweite Gussform und die dritte Gussform sind vorzugsweise ausgebildet, um mit jeweiligen Entformungsbereichen für den Freiraum zwischen der Rasteinrichtung und dem Grundkörper ineinander einzugreifen, wenn die Gussformen aneinander zugestellt sind bzw. wenn das Spritzgießwerkzeug geschlossen ist. Beispielsweise kann die zweite Gussform zwei entlang der Längsachse voneinander beabstandete Entformungsbereiche und die dritte Gussform einen Entformungsbereich zwischen den Entformungsbereichen der zweiten Gussform aufweisen.

Die zweite Gussform und die dritte Gussform können außerdem ausgebildet sein, um Bereiche außerhalb des Freiraums, beispielsweise die Schenkel des Schutzbügels und/oder den Schutzbügel seitlich zu entformen.

Grundsätzlich können neben der ersten, zweiten und dritten Gussform auch noch weitere Gussformen vorgesehen sein, beispielsweise eine vierte Gussform zur Entformung einer Ausnehmung für Steckverbinderkomponenten, die sich längs durch den Grundkörper erstreckt, oder zur Entformung weiterer Abschnitte bzw. Bereiche des Grundkörpers. Vorzugsweise ist allerdings ein dreiteiliges Spritzgießwerkzeug vorgesehen, wie vorstehend beschrieben.

Zur Realisierung der Bewegung der Gussformen können entsprechende Werkzeugschieber vorgesehen sein, die mit einer jeweiligen Aktuatoreinrichtung, beispielsweise einem elektrisch, pneumatisch und/oder hydraulisch angetriebenen Linearaktuator, gekoppelt sind.

Die Bewegung zwischen der jeweiligen Gussform und dem Steckverbindergehäuse kann durch eine Bewegung der Gussform und/oder durch eine Bewegung des Steckverbindergehäuses erfolgen. Relevant ist grundsätzlich nur eine relative Bewegung zwischen der jeweiligen Gussform und dem Steckverbindergehäuse. Vorzugsweise wird allerdings die jeweilige Gussform bewegt und gegebenenfalls durch eines oder mehrere Auswerfmittel sichergestellt, dass das Steckverbindergehäuse durch das Entfernen der Gussformen auch tatsächlich aus dem Spritzgießwerkzeug ausgeworfen wird.

Die Erfindung betrifft auch einen Steckverbinder, insbesondere einen elektrischen Steckverbinder, aufweisend eines der Steckverbindergehäuse gemäß den vorstehenden und nachfolgenden Ausführungen.

Außerdem betrifft die Erfindung eine Steckverbindung, aufweisend den vorstehend genannten Steckverbinder, sowie den Gegensteckverbinder.

Der Steckverbinder bzw. die Steckverbindung kann besonders vorteilhaft innerhalb eines Fahrzeugs, insbesondere eines Kraftfahrzeugs, verwendet werden. Mögliche Einsatzgebiete sind autonomes Fahren, Fahrer-Assistenz-Systeme, Navigationssysteme, "Infotainment"-Systeme, Fond-Entertainment-Systeme, Internetverbindungen und Wireless Gigabit (IEEE 802.11ad Standard). Mögliche Anwendungen betreffen hochaufgelöste Kameras, beispielsweise 4K- und 8K-Kameras, Sensorik, Onboard-Computer, hochauflösende Bildschirme, hochauflösende Armaturenbretter, 3D-Navigationsgeräte und Mobilfunkgeräte. Der Begriff "Fahrzeug" beschreibt dabei jegliches Fortbewegungsmittel, insbesondere Fahrzeuge zu Lande, zu Wasser oder in der Luft, eingeschlossen auch Raumfahrzeuge. Der erfindungsgemäße Steckverbinder eignet sich grundsätzlich aber für beliebige Anwendungen innerhalb der gesamten Elektrotechnik und ist nicht auf den Einsatz in der Fahrzeugtechnik beschränkt zu verstehen.

Der Steckverbinder ist nicht auf einen spezifischen Steckverbindertyp beschränkt, wobei sich die Erfindung insbesondere für Steckverbinder und Steckverbindungen für die Hochfrequenztechnik eignet. Es kann sich dabei insbesondere um Steckverbinder bzw. Steckverbindungen des Typs PL, BNC, TNC, SMBA (FAKRA), SMA, SMB, SMS, SMC, SMP, BMS, HFM (FAKRA-Mini), H-MTD, BMK, Mini-Coax oder MATE-AX handeln.

Merkmale, die im Zusammenhang mit einem der Gegenstände der Erfindung, namentlich gegeben durch eines der erfindungsgemäßen Steckverbindergehäuse, den Steckverbinder, die Steckverbindung, das Spritzgießverfahren und die Spritzgießvorrichtung beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Ferner sei betont, dass die vorliegend beschriebenen Werte und Parameter Abweichungen oder Schwankungen von ±10% oder weniger, vorzugsweise ±5% oder weniger, weiter bevorzugt ±1% oder weniger, und ganz besonders bevorzugt ±0,1% oder weniger des jeweils benannten Wertes bzw. Parameters mit einschließen, sofern diese Abweichungen bei der Umsetzung der Erfindung in der Praxis nicht ausgeschlossen sind. Die Angabe von Bereichen durch Anfangs- und Endwerte umfasst auch all diejenigen Werte und Bruchteile, die von dem jeweils benannten Bereich eingeschlossen sind, insbesondere die Anfangs- und Endwerte und einen jeweiligen Mittelwert.

Nachfolgend werden Ausführungsbeispiele der Erfindung anhand der Zeichnungen näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen schematisch:
- Figur 1: ein Steckverbindergehäuse gemäß einem ersten Ausführungsbeispiel der Erfindung mit Schutzwänden, in einer perspektivischen Darstellung;
- Figur 2: das Steckverbindergehäuse der Figur 1 in einer weiteren perspektivischen Darstellung;
- Figur 3: ein Steckverbindergehäuse gemäß einem zweiten Ausführungsbeispiel der Erfindung mit Schutzstegen, in einer perspektivischen Darstellung;
- Figur 4: ein Steckverbindergehäuse gemäß einem dritten Ausführungsbeispiel der Erfindung, mit zwei beispielhaften Schutzbügeln, in einer perspektivischen Darstellung;
- Figur 5: ein Steckverbindergehäuse gemäß einem bevorzugten, vierten Ausführungsbeispiel der Erfindung, mit als Schutzwänden und einem Schutzbügel, in einer perspektivischen Darstellung;
- Figur 6: das Steckverbindergehäuse der Figur 5 in einer weiteren perspektivischen Darstellung;
- Figur 7: das alternative Steckverbindergehäuse gemäß einem beispielhaften Ausführungsbeispiel der Erfindung, mit einem einseitig angebundenen Schutzbügel, in einer perspektivischen Darstellung;
- Figur 8: eine erfindungsgemäße Spritzgießvorrichtung mit einem mehrteiligen Spritzgießwerkzeug in einem geschlossenen Zustand zur Herstellung eines Steckverbindergehäuses in einer perspektivischen Darstellung; und
- Figur 9: die Spritzgießvorrichtung der Figur 8 mit zur Entformung des Steckverbindergehäuses geöffnetem Spritzgießwerkzeug, in einer perspektivischen Darstellung.

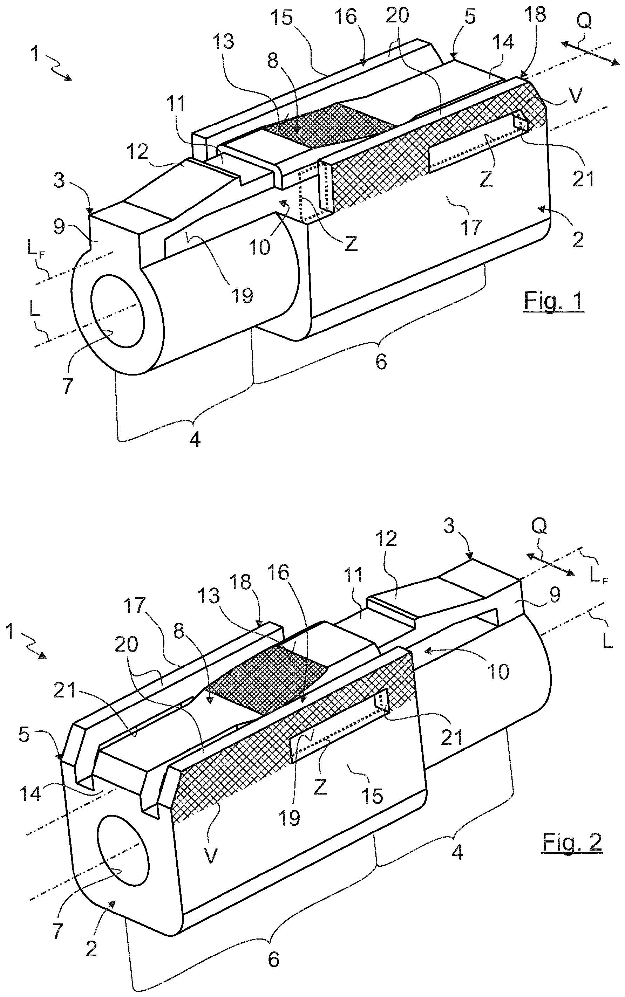

Die Figuren 1 und 2 zeigen ein Steckverbindergehäuse 1 für einen Steckverbinder gemäß einem ersten Ausführungsbeispiel der Erfindung. Bei einem Steckverbinder kann es sich im Rahmen der Erfindung um einen elektrischen, gegebenenfalls aber auch um einen optischen Steckverbinder handeln.

In den Ausführungsbeispielen sind einteilig ausgebildete Steckverbindergehäuse 1 gezeigt, die gegebenenfalls aber auch noch weitere Komponenten aufweisen können, wie beispielsweise metallische Abschirmungen oder zusätzliche Kunststoffbauteile.

Das Steckverbindergehäuse 1 weist einen aus einem Kunststoff ausgebildeten Grundkörper 2 auf, der sich entlang einer Längsachse L erstreckt. In den Ausführungsbeispielen ist der Grundkörper 2 als vornehmlich längliches Bauteil ausgebildet. Grundsätzlich kann allerdings auch ein winkliger Grundkörper 2 bzw. ein winkliger Steckverbinder vorgesehen sein.

Der Grundkörper 2 weist ein steckerseitiges Ende 3 auf, ausgehend von dem sich ein vorderer Endabschnitt 4 des Steckverbindergehäuses 1 entlang der Längsachse L erstreckt. Dieser vordere Endabschnitt 4 ist vornehmlich zur Kontaktierung mit dem Gegensteckverbindergehäuse des Gegensteckverbinders vorgesehen (nicht dargestellt), bildet also das Steckinterface aus. Ein abgangsseitiges Ende 5 des Grundkörpers 2 bzw. ein hinterer Endabschnitt 6 ist vorliegend zur Verbindung mit einem optischen oder elektrischen Kabel vorgesehen (nicht dargestellt). Alternativ kann auch eine Verbindung mit beispielsweise einer Leiterbahn oder sonstigen Leitungen einer elektrischen Schaltung vorgesehen sein (ebenfalls nicht dargestellt).

Beispielhaft weist der Grundkörper 2 eine Ausnehmung 7 zur Aufnahme von nicht dargestellten Steckverbinderkomponenten, wie beispielsweise Kontaktelementen oder Dielektrika, auf.

Vorzugsweise sind das Steckverbindergehäuse 1, insbesondere der Grundkörper 2 und die mit dem Grundkörper 2 einteilig verbundenen, nachfolgend noch beschriebenen Komponenten, mittels des nachfolgend beschriebenen Spritzgießverfahrens hergestellt.

Zur mechanischen Verrastung mit einem Gegensteckverbinder weist das Steckverbindergehäuse 1 eine Rasteinrichtung 8 auf, die sich parallel zu der Längsachse L des Grundkörpers 2 erstreckt und die einen ersten Verbindungsabschnitt 9 aufweist, über den sie einteilig mit dem Grundkörper 2 verbunden ist. Zwischen der Rasteinrichtung 8 und dem Grundkörper 2 wird ein Freiraum 10 ausgebildet, der sich entlang einer Längsachse L_{F} erstreckt.

In den Ausführungsbeispielen ist die Rasteinrichtung 8 als parallel zu der Längsachse L des Grundkörpers 2 bzw. parallel zu der Längsachse L_{F} des Freiraums 10 verlaufender elastischer Federarm 11 ausgebildet, auf dem ein als Rasthaken 12 ausgebildetes Rastelement angeordnet ist. Durch den Freiraum 10 zwischen dem Rasthaken 12 und dem Grundkörper 2 wird die Möglichkeit bereitgestellt, das Rastelement bzw. den Rasthaken 12 ausgehend von einem Grundzustand des Federarms 11 in Richtung auf den Grundkörper 2 auszulenken, um ein Verrasten und Entrasten mit dem Gegensteckverbinder zu ermöglichen. Für eine Betätigung der Rasteinrichtung 8 bzw. des Federarms 11 durch einen Monteur ist eine in der Regel geriffelte Betätigungsfläche 13 vorgesehen.

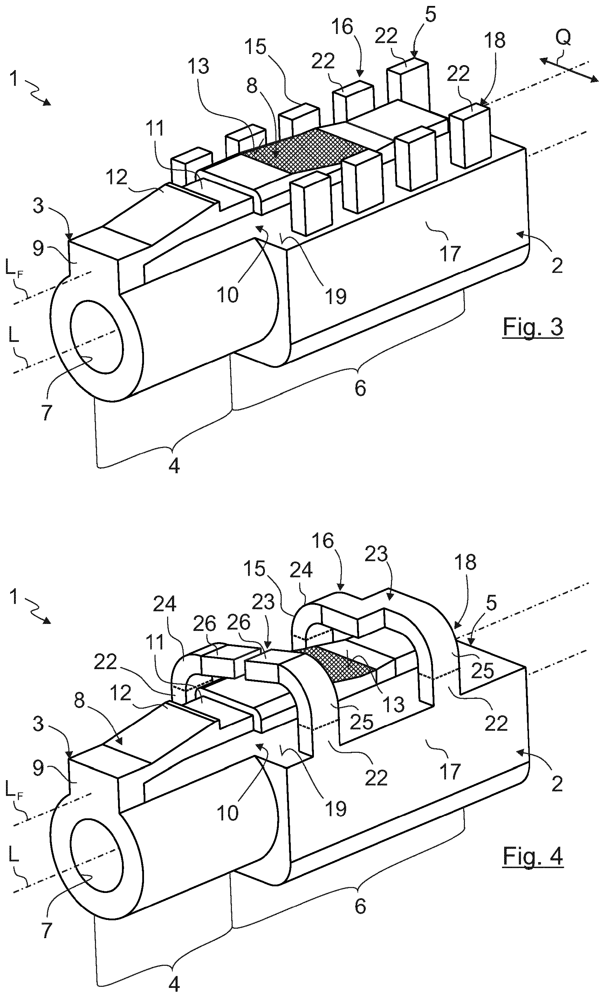

In den in den Figuren 1, 2, 5 und 6 gezeigten Ausführungsbeispielen des Steckverbindergehäuses 1 weist der Federarm 11 neben dem ersten Verbindungsabschnitt 9 außerdem noch einen zweiten Verbindungsabschnitt 14 auf, um den Federarm 11 an dem von seinem ersten Ende abgewandten, zweiten Ende ebenfalls mit dem Grundkörper 2 zu verbinden. Der Freiraum 10 erstreckt sich dabei entlang der Längsachse L_{F} über die gesamte Länge zwischen den beiden Verbindungsabschnitten 9, 14. Auf diese Weise wird eine beidseitig angebundene Rasteinrichtung 8 bzw. ein beidseitig angebundener Federarm 11 bereitgestellt, was die Robustheit der Rastverbindung erhöhen kann. Gleichwohl kann aber auch ein nur einseitig angebundener Federarm 11 vorgesehen sein, wie in den Figuren 3, 4 und 7 dargestellt.

Für einen mechanischen Schutz der Rasteinrichtung 8 weist das Steckverbindergehäuse 1 ein an einer ersten Seite 15 des Grundkörpers 2 angeordnetes, erstes Schutzelement 16 und ein an einer zweiten Seite 17 des Grundkörpers 2 angeordnetes, zweites Schutzelement 18 auf, wobei sich die Schutzelemente 16, 18 jeweils einteilig ausgehend von dem Grundkörper 2 erstrecken. Die Rasteinrichtung 8 bzw. der Federarm 11 ist derart zwischen den Schutzelementen 16, 18 angeordnet, dass jedes der Schutzelemente 16, 18 den zwischen der Rasteinrichtung 8 und dem Grundkörper 2 ausgebildeten Freiraum 10 ausgehend von der jeweiligen Seite 15, 17 bzw. in einer Querrichtung Q quer zu der Längsachse L_{F} des Freiraums 2 in zumindest einen Verdeckungsbereich V (vgl. Schraffierungen in den Figuren 1 und 2) verdeckt.

Die Schutzelemente 16, 18 erstrecken sich vorliegend ausgehend von einer die erste Seite 15 mit der zweiten Seite 17 verbindenden Basisfläche 19 des Grundkörpers 2, mit der auch die Verbindungsabschnitte 9, 14 verbunden sind. Der Freiraum 10 befindet sich zwischen der Rasteinrichtung 8 und der Basisfläche 19. Die Schutzelemente 16, 18 erheben sich vornehmlich orthogonal aus der Basisfläche 19 und verlaufen derart am Rand des Grundkörpers 2 bzw. der Basisfläche 19, dass diese eine Verlängerung der Seitenfläche der jeweiligen Seite 15, 17 darstellen. Es kann allerdings auch vorgesehen sein, dass die Schutzelemente 16, 18 und/oder die Verbindungsabschnitte 9, 14 von dem jeweiligen Rand des Grundkörpers 2 beabstandet sind, wie dies anhand der Schutzelemente 16, 18 der Figur 3 rein beispielhaft verdeutlicht wird.

Um die Rasteinrichtung 8 möglichst umfassend zu schützen, sind die Verdeckungsbereiche V der Schutzelemente 16, 18 zusätzlich zu der Verdeckung des Freiraums 10 außerdem ausgebildet, auch die Rasteinrichtung 8 in der Querrichtung Q zumindest bereichsweise zu verdecken.

Es kann vorgesehen sein, dass die Schutzelemente 16, 18 die Rasteinrichtung 8 in dem von dem steckerseitigen Ende 3 ausgehenden, vorderen Endabschnitt 4 entlang der Längsachse L des Grundkörpers 2 bzw. der Längsachse L_{F} des Freiraums 10 seitlich nicht verdecken, wie in allen Ausführungsbeispielen dargestellt. Hierdurch kann die Zugänglichkeit des Steckverbindergehäuses 1 für das Gegensteckverbindergehäuse verbessert sein.

Im Rahmen der Erfindung ist vorgesehen, dass die Schutzelemente 16, 18 außerdem jeweils zumindest einen Zugangsbereich Z ausbilden, durch den der Freiraum 10 entlang der Querrichtung Q zugänglich ist. Um sicherzustellen, dass der Freiraum 10 entlang der Längsachse L_{F} jeweils zumindest ausgehend von einer Seite 15, 17 bzw. von einem der Schutzelemente 16, 18 zugänglich ist, sind die Schutzelemente 16, 18 derart auf dem Grundkörper 2 angeordnet und ausgebildet, dass jedem Verdeckungsbereich V einer der Zugangsbereiche Z des jeweils anderen Schutzelements 18, 16 in Querrichtung Q gegenüberliegt. Der Freiraum 10 ist somit ausgehend von der ersten Seite 15 und/oder der zweiten Seite 17 entlang der Längsachse L_{F} stets vollständig zugänglich. Sofern die Zugänglichkeit ausgehend von einer Seite 15, 17 versperrt ist, ist zumindest die Zugänglichkeit von der anderen Seite 17, 15 dennoch gewährt. Um dies zu ermöglichen, können die Schutzelemente 16, 18 auf verschiedene Weise ausgebildet sein. Einige Möglichkeiten sind im Rahmen der vorliegenden Ausführungsbeispiele - mitunter auch in Kombination - erläutert, sollen die Erfindung jedoch hierauf nicht einschränken.

In den in den Figuren 1, 2, 5 und 6 dargestellten Ausführungsbeispielen weisen die Schutzelemente 16, 18 jeweilige Schutzwände 20 auf. Die Schutzwand 20 des zweiten Schutzelements 18 ist dabei entlang der Längsachse L_{F} des Freiraums 10 derart zu der Schutzwand 20 des ersten Schutzelements 16 verkürzt bzw. versetzt positioniert, dass ein durch die Schutzwand 20 des ersten Schutzelements 16 verdeckter Verdeckungsbereich V des Freiraums 10 ausgehend von der zweiten Seite 17, auf der das zweite Schutzelement 18 positioniert ist, zugänglich ist. Das zweite Schutzelement 18 weist somit in seinem vorderen, dem steckerseitigen Ende 3 des Grundkörpers 2 zugewandten axialen Abschnitt einen sich entlang der Längsachse L_{F} des Freiraums 10 erstreckenden, erhebungsfreien bzw. schutzwandfreien Bereich auf, um einen der Zugangsbereiche Z auszubilden.

Ergänzend weisen die Schutzwände 20 jeweilige als Fenster 21 ausgebildete Ausnehmungen auf, um jeweils einen weiteren Zugangsbereich Z auszubilden, um den Freiraum 10 zwischen der Rasteinrichtung 8 und dem Grundkörper 2 entlang der Querrichtung Q entsprechend zugänglich zu machen. Dabei ist das Fenster 21 des ersten Schutzelements 16 entlang der Längsachse L_{F} des Freiraums 10 derart zu dem Fenster 21 des zweiten Schutzelements 18 versetzt positioniert, dass die Verdeckungsbereiche V des Freiraums 10 wiederum wahlweise von zumindest einer der beiden Seiten 15, 17 zugänglich bleiben.

Eine Alternative oder auch eine Ergänzung zu Schutzelementen 16, 18, die Schutzwände 20 aufweisen, ist in Figur 3 dargestellt. Dabei ist vorgesehen, dass die Schutzelemente 16, 18 jeweilige Schutzstege 22 aufweisen, die vorzugsweise zinnenartig auf dem Grundkörper 2 verteilt sind, wobei die Schutzstege 22 des ersten Schutzelements 16 entlang der Längsachse L_{F} des Freiraums derart zu den Schutzstegen 22 des zweiten Schutzelements 18 versetzt positioniert sind, dass die durch die Schutzstege 22 eines der Schutzelemente 16, 18 verdeckten Verdeckungsbereiche V des Freiraums 10 ausgehend von der gegenüberliegenden Seite 17, 15, auf der das jeweils andere Schutzelement 18, 16 positioniert ist, zugänglich sind. Durch die jeweiligen erhebungsfreien Bereiche zwischen den Schutzstegen 22 werden somit die jeweiligen Zugangsbereiche Z realisiert. Auch auf diese Weise kann ein guter Schutz für die Rasteinrichtung 8 bereitgestellt werden.

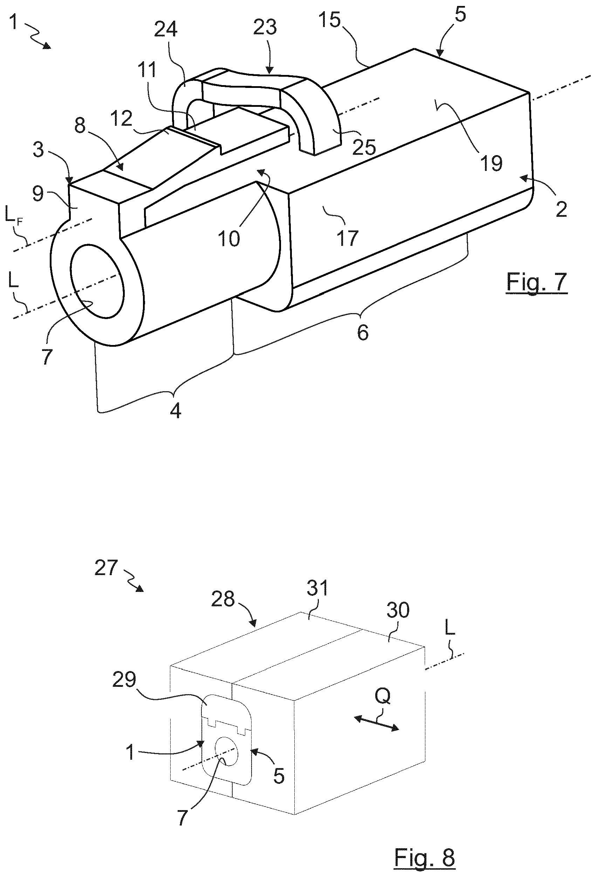

Eine ergänzende oder alternative Möglichkeit zum Schutz der Rasteinrichtung 8 ist die Verwendung eines Schutzbügels 23, wie in den Figuren 4 bis 7 dargestellt. In Figur 4 ist beispielhaft ein Ausführungsbeispiel eines Steckverbindergehäuses 1 mit zwei Schutzbügeln 23 gezeigt, die zur Verdeutlichung der Designfreiheit unterschiedlich ausgestaltet sind. Auch die Verwendung nur eines einzigen Schutzbügels 23 (vgl. Figur 7) oder von mehr als zwei Schutzbügeln 23 in identischer oder jeweils unterschiedlicher Ausgestaltung kann vorgesehen sein.

Ein Schutzbügel 23 weist vorzugsweise einen ersten Schenkel 24 und einen zweiten Schenkel 25 auf, wobei der erste Schenkel 24 einteilig mit dem ersten Schutzelement 16 und der zweite Schenkel 25 einteilig mit dem zweiten Schutzelement 18 verbunden ist. Die Schutzelemente 16, 18 können daher auch unmittelbar die Schenkel 23, 24 ausbilden.

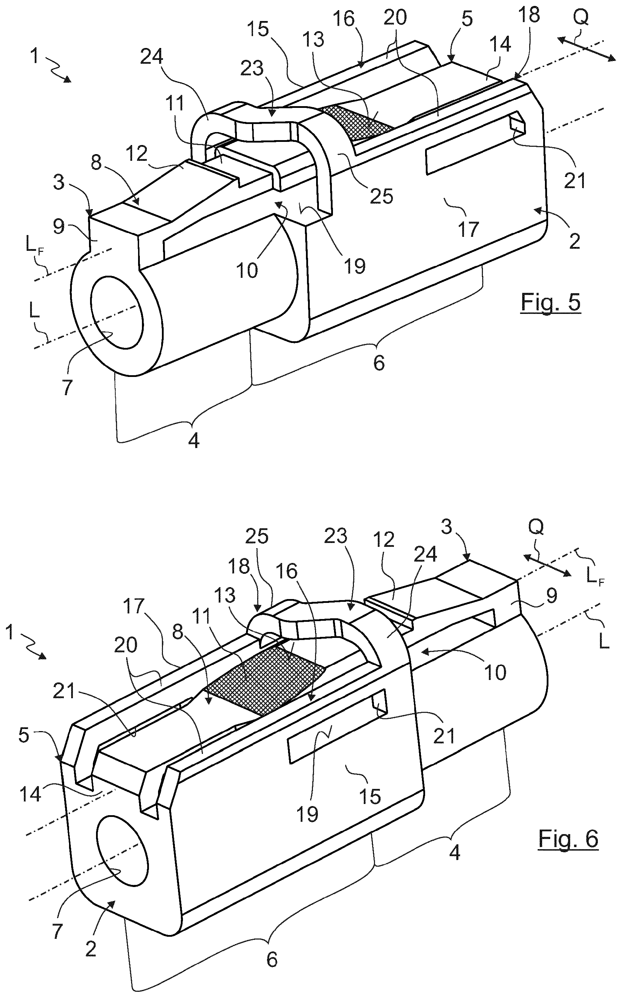

Die Schenkel 24, 25 können beispielsweise ausgehend von einer der vorstehend gezeigten Schutzwände 20 (vgl. Figuren 5 und 6) oder ausgehend von Schutzstegen 22 verlaufen, wie in Figur 4 strichliniert angedeutet. Der Schutzbügel 23 erstreckt sich schließlich von dem ersten Schutzelement 16 bzw. von dem ersten Schenkel 24 zu dem zweiten Schutzelement 18 bzw. zu dem zweiten Schenkel 25 und überbrückt die Rasteinrichtung 8 für deren mechanischen Schutz. Wie sich anhand des vorderen Schutzbügels 23 gemäß Figur 4 ergibt, ist es dafür auch nicht erforderlich, dass der Schutzbügel 23 einen geschlossenen Verlauf aufweist. Der Schutzbügel 23 kann auch durch zwei Halbbügel 26 ausgebildet sein, die sich ausgehend von dem jeweiligen Schenkel 24, 25 aufeinander zu erstrecken. Auch ein nur einseitig mit dem Grundkörper 2 verbundenen Schutzbügel 23, wie in Figur 7 dargestellt, kann vorgesehen sein.

Insofern dies erforderlich ist, können die Schenkel 24, 25 des Schutzbügels 23 entlang der Längsachse L_{F} des Freiraums 10 versetzt zueinander positioniert sein, wie in den Figuren 4 bis 6 dargestellt. Insofern der Schutzbügel 23 allerdings lediglich auf einer der Schutzwände 20 oder auf einem der Schutzstege 22 aufgesetzt ist, kann gegebenenfalls auch eine nicht versetzte Anordnung der Schenkel 24, 25 vorgesehen sein, insbesondere wenn die jeweilige Schutzwand 20 und/oder der jeweilige Schutzsteg 22 ein Fenster 21 oder eine sonstige Ausnehmung aufweist, um die Zugänglichkeit zu dem Freiraum 10 zu gewährleisten.

Insofern die beiden Schenkel 24, 25 des Schutzbügels 23 entlang der Längsachse L_{F} zueinander versetzt sind, kann vorzugsweise ein kurvenförmiger Verlauf des Schutzbügels 23 zwischen den beiden Schenkeln 24, 25 vorgesehen sein, wie in dem bevorzugten Ausführungsbeispiel der Figuren 5 und 6 dargestellt. Grundsätzlich können allerdings auch alternative Verläufe vorgesehen sein, wie ein linearer Verlauf (vgl. vorderer Schutzbügel 23 in Figur 4) oder ein stufiger Verlauf (vgl. hinterer Schutzbügel 23 der Figur 4).

Die Figuren 5 und 6 zeigen ein Steckverbindergehäuse 1 gemäß einem besonders bevorzugten Ausführungsbeispiel der Erfindung. Das Steckverbindergehäuse 1 weist einen beidseitig angebundenen Federarm 11 auf, der von jeweiligen Schutzwänden 20 seitlich geschützt ist, wobei das zweite Schutzelement 18 zur Ausbildung eines der Zugangsbereiche Z wiederum einen vorderen, erhebungsfreien Bereich aufweist, also zu dem ersten Schutzelement 16 entlang der Längsachse L_{F} des Freiraums 10 verkürzt und in Richtung auf das abgangsseitige Ende 5 des Grundkörpers 2 versetzt ist. Ferner weisen die Schutzelemente 16, 18 jeweilige Ausnehmungen in der Art von Fenstern 20 auf, um weitere Zugangsbereiche Z bereitzustellen, die mit jeweils gegenüberliegenden Verdeckungsbereichen V korrespondieren. Ferner ist die in Figur 5 und 6 gezeigte Rasteinrichtung 8 durch den auf die Schutzwände 20 aufgesetzten Schutzbügel 23 auch von oben geschützt. Ein wie in Figur 5 und 6 dargestelltes Steckverbindergehäuse 1 vermag einen besonders vorteilhaften Schutz für die Rasteinrichtung 8 bereitzustellen und ist gleichzeitig kostengünstig im Rahmen einer Massenfertigung mittels eines Spritzgießverfahrens herstellbar.

Zur Verdeutlichung, dass im Rahmen des erfinderischen Gesamtkonzepts auch ein alternatives Steckverbindergehäuse 1 vorgesehen sein kann, mit lediglich einem oder mehreren

Schutzbügeln 23, ist in Figur 7 ergänzend ein solches alternatives Steckverbindergehäuse 1 beispielhaft gezeigt. Dabei sei betont, dass die weiteren in den Ausführungsbeispielen und Figuren gezeigten Merkmale und Vorteile der jeweiligen Steckverbindergehäuse 1 grundsätzlich auch auf das alternative Steckverbindergehäuse 1 übertragbar sein können - und umgekehrt.

Auch das in Figur 7 gezeigte Steckverbindergehäuse 1 weist einen aus einem Kunststoff ausgebildeten Grundkörper 2, sowie eine Rasteinrichtung 8 zur mechanischen Verbindung mit einer korrespondierenden Gegenrasteinrichtung eines Gegensteckverbinders auf, die ausgebildet sein kann, wie bereits erläutert. Das alternative Steckverbindergehäuse 1 weist außerdem einen Schutzbügel 23 auf, der ebenfalls ausgebildet sein kann, wie bereits erläutert. Der Schutzbügel 23 kann insbesondere einen ersten Schenkel 24 und einen zweiten Schenkel 24 aufweisen, wobei sich zumindest einer der Schenkel 24, 25 (vorzugsweise aber beide Schenkel 24, 25, wie in den vorstehenden Ausführungsbeispielen beschrieben) einteilig ausgehend von dem Grundkörper 2 erstreckt, und wobei die Rasteinrichtung 8 zwischen den Schenkeln 24, 25 angeordnet und von dem Schutzbügel 23 für deren mechanischen Schutz überbrückt ist. In Figur 7 ist er zweite Schenkel 25 beispielhaft nicht mit dem Grundkörper 2 verbunden.

Zumindest der Schenkel 24, der einteilig mit dem Grundkörper 2 verbunden ist, ist ausgebildet, um den zwischen der Rasteinrichtung 8 und dem Grundkörper 2 ausgebildeten Freiraum 10 in zumindest einem Verdeckungsbereich V in einer Querrichtung Q quer zu der Längsachse L_{F} zu verdecken. Ferner bildet zumindest einer der Schenkel 24, 25 zumindest einen Zugangsbereich Z aus (im Ausführungsbeispiel der Figur 7 der zweite Schenkel 25), durch den der Freiraum 10 entlang der Querrichtung Q zugänglich ist. Auf diese Weise kann sichergestellt werden, dass dem Verdeckungsbereich V des ersten Schenkels 24 einer der Zugangsbereiche Z des zweiten Schenkels 25 entlang der Querrichtung Q gegenüberliegt. Der zweite Schenkel 25 ist hierzu beispielhaft ausreichend weit von dem Grundkörper 2 beabstandet, dass der Freiraum 10 in Querrichtung zugänglich ist.

An dieser Stelle sei erwähnt, dass die Schenkel 24, 25 in Figur 7 zueinander axial entlang der Längsachse L_{F} des Freiraums 10 versetzt angeordnet sind. Ein solcher axialer Versatz ist allerdings nicht unbedingt erforderlich, insbesondere wenn einer der Schenkel 24, 25 von dem Grundkörper 2 ohnehin beabstandet ist, wie dies in Figur 7 der Fall ist. Die Schenkel 24, 25 eines Schutzbügels 23 müssen daher also nicht zwingend axial zueinander versetzt sein, können also auch an derselben axialen Position entlang der Längsachse L_{F} des Freiraums 10 angeordnet sein.

Insbesondere können auch mehrere einseitig angebundene Schutzbügel 23 vorgesehen sein, die entlang der Längsachse L_{F} des Freiraums 10 versetzt sind und bei denen entlang der Längsachse L_{F} abwechselnd der erste Schenkel 24 und der zweite Schenkel 25 mit dem Grundkörper 2 verbunden ist.

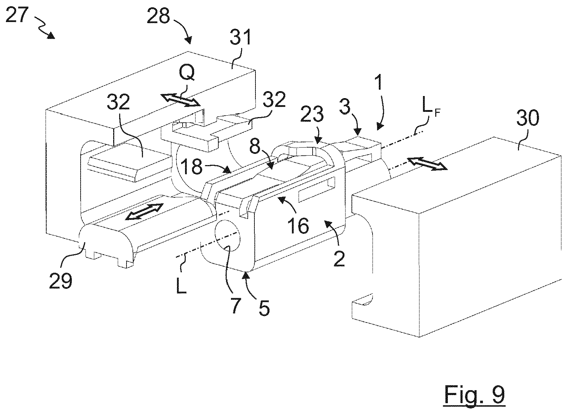

Beispielhaft ist in den Figuren 8 und 9 eine Spritzgießvorrichtung 27 zur Herstellung des Steckverbindergehäuses 1 dargestellt. Bei dem Steckverbindergehäuse 1 handelt es sich beispielhaft um das Steckverbindergehäuse 1 des Ausführungsbeispiels der Figuren 5 und 6.

Die Spritzgießvorrichtung 27 weist ein mehrteiliges Spritzgießwerkzeug 28 auf, das in seinem zusammengefügten Zustand (vgl. Figur 8) eine Negativform für das Steckverbindergehäuse 1 ausbildet, so dass sich nach dem Erstarren des eingespritzten, flüssigen Kunststoffs beispielsweise das in den Figuren 5 und 6 dargestellte Steckverbindergehäuse 1 oder das in Figur 7 gezeigte, alternative Steckverbindergehäuse 1 ergibt. In Figur 9 ist das mehrteilige Spritzgießwerkzeug 28 in einem geöffneten Zustand gezeigt und das Steckverbindergehäuse 1 damit entformt.

An dieser Stelle sei angemerkt, dass die in dem Grundkörper 2 ausgebildete Ausnehmung 7 für die weiteren Steckverbinderkomponenten grundsätzlich auf beliebige Weise hergestellt werden kann, beispielsweise mittels einer in den Figuren 8 und 9 nicht dargestellten, weiteren Gussform oder aber auch durch eine Nachbearbeitung, beispielsweise das Einfügen einer Bohrung in den Grundkörper 2.

Grundsätzlich kann eine erste Gussform 29 des Spritzgießwerkzeugs 28 zur Entformung des Steckverbindergehäuses 1 entlang der Längsachse L des Grundkörpers 2 bzw. entlang der Längsachse L_{F} des Freiraums 10 relativ zu dem Steckverbindergehäuse 1 bewegbar sein, um axiale Bereiche zwischen der Rasteinrichtung 8 und den Schutzelementen 16, 18 zu entformen. Diese Entformung kann sich vorzugsweise auf die axialen Bereiche zwischen der Rasteinrichtung 8 und den Schutzelementen 16, 18 in dem hinteren Endabschnitt 6 entlang der Längsachse L des Grundkörpers 2 beschränken, da im Bereich des Interfaces bzw. des vorderen Endabschnitts 4 des Steckverbindergehäuses 1 durch den Rasthaken 12 und gegebenenfalls vorhandene mechanische Kodierungsmittel (nicht dargestellt) weitere Hinterschneidungen ausgebildet sein können, die eine Entformung von den Seiten 15, 17 erforderlich machen.

Das Spritzgießwerkzeug 28 weist außerdem eine zweite Gussform 30 und eine dritte Gussform 31 auf, die zur Entformung des Steckverbindergehäuses 1 jeweils in Querrichtung Q relativ zu dem Steckverbindergehäuse 1 bewegbar und sich gegenüberliegend angeordnet sind. Die zweite Gussform 30 und die dritte Gussform 31 vermögen ausgehend von der jeweiligen Seite 15, 17 die jeweils von dem Schutzelement 16, 18 nicht verdeckten Abschnitte des Freiraums 10 zwischen der Rasteinrichtung 8 und dem Grundkörper 2 durch die jeweiligen Zugangsbereiche Z hindurch zu entformen. Vorzugsweise werden die zweite Gussform 30 und die dritte Gussform 31 zeitsynchron bewegt, besonders bevorzug außerdem auch die erste Gussform 29.

Die zweite Gussform 30 und die dritte Gussform 31 können Entformungsbereiche 32 für den Freiraum 10 unterhalb der Rasteinrichtung 8 aufweisen, die im verbundenen Zustand des Spritzgießwerkzeugs 28 ineinander eingreifen.

An dieser Stelle sei erwähnt, dass die dargestellte Spritzgießvorrichtung 27 selbstverständlich auch noch weitere, übliche Komponenten aufweisen kann, beispielsweise Mittel zum Einspritzen des flüssigen Kunststoffs und Mittel zum Auswerfen des Steckverbindergehäuses 1, Werkzeugschieber und Aktuatoreinrichtungen. Da Spritzgießvorrichtungen 27 grundsätzlich bekannt sind, sind diese Komponenten in den Figuren 8 und 9 zur Vereinfachung nicht dargestellt.

## Patentansprüche

1. Steckverbindergehäuse (1) für einen Steckverbinder, aufweisend
- einen aus einem Kunststoff ausgebildeten Grundkörper (2);
- eine Rasteinrichtung (8) zur mechanischen Verbindung mit einer korrespondierenden Gegenrasteinrichtung eines Gegensteckverbinders, wobei die Rasteinrichtung (8) einen ersten Verbindungsabschnitt (9) aufweist, über den die Rasteinrichtung (8) einteilig mit dem Grundkörper (2) verbunden ist, wobei zwischen der Rasteinrichtung (8) und dem Grundkörper (2) zumindest abschnittsweise ein Freiraum (10) gebildet ist, der sich entlang einer Längsachse (L_{F}) auf dem Grundkörper (2) erstreckt;
- ein erstes Schutzelement (16) und ein zweites Schutzelement (18), die sich jeweils einteilig ausgehend von dem Grundkörper (2) derart erstrecken, dass die Rasteinrichtung (8) zwischen den Schutzelementen (16, 18) angeordnet ist, wobei jedes der Schutzelemente (16, 18) den zwischen der Rasteinrichtung (8) und dem Grundkörper (2) ausgebildeten Freiraum (10) in zumindest einem Verdeckungsbereich (V) in einer Querrichtung (Q) quer zu der Längsachse (L_{F}) verdeckt,
wobei jedes der Schutzelemente (16, 18) außerdem zumindest einen Zugangsbereich (Z) ausbildet, durch den der Freiraum (10) entlang der Querrichtung (Q) zugänglich ist,
**dadurch gekennzeichnet, dass** dem der Verdeckungsbereiche (V) einer der Zugangsbereiche (Z) des jeweils anderen Schutzelements (18, 16) entlang der Querrichtung gegenüberliegt.

2. Steckverbindergehäuse (1) nach Anspruch 1,
**dadurch gekennzeichnet, dass**
die Rasteinrichtung (8) einen entlang der Längsachse (L_{F}) verlaufenden elastischen Federarm (11) aufweist, auf dem ein Rastelement (12), vorzugsweise ein Rasthaken, angeordnet ist, wobei sich der Freiraum (10) zumindest zwischen dem Rastelement (12) und dem Grundkörper (2) befindet, um ausgehend von einem Grundzustand des Federarms (11) eine Auslenkung des Rastelements (12) in Richtung auf den Grundkörper (2) zu ermöglichen, und wobei der Federarm (11) an einem ersten Ende über den ersten Verbindungsabschnitt (9) mit dem Grundkörper (2) und außerdem an einem von dem ersten Ende abgewandten, zweiten Ende über einen zweiten Verbindungsabschnitt (14) einteilig mit dem Grundkörper (2) verbunden ist, wobei sich der Freiraum (10) entlang der Längsachse (L_{F}) über die gesamte Länge zwischen den beiden Verbindungsabschnitten (9, 14) erstreckt.

3. Steckverbindergehäuse (1) nach Anspruch 1 oder 2,
**dadurch gekennzeichnet, dass**
zumindest einer der Verdeckungsbereiche (V) eines der Schutzelemente (16, 18), vorzugsweise alle Verdeckungsbereiche (V) jedes der Schutzelemente (16, 18), zusätzlich zu dem Freiraum (10) auch die Rasteinrichtung (8) in der Querrichtung (Q) zumindest bereichsweise verdeckt.

4. Steckverbindergehäuse (1) nach Anspruch 3,
**dadurch gekennzeichnet, dass**
die Schutzelemente (16, 18) die Rasteinrichtung (8) in einem von einem steckerseitigen Ende (3) ausgehenden, vorderen axialen Endabschnitt (4) in Querrichtung (Q) nicht verdecken.

5. Steckverbindergehäuse (1) nach einem der Ansprüche 1 bis 4,
**dadurch gekennzeichnet, dass**
die Schutzelemente (16, 18) entlang der Längsachse (L_{F}) verlaufende jeweilige Erhebungen (20, 22) aufweisen, um einen jeweiligen Verdeckungsbereich (V) auszubilden, und entlang der Längsachse (L_{F}) verlaufende, erhebungsfreie Bereiche aufweisen, um einen jeweiligen Zugangsbereich (Z) auszubilden.

6. Steckverbindergehäuse (1) nach einem der Ansprüche 1 bis 5,
**dadurch gekennzeichnet, dass**
die Schutzelemente (16, 18) entlang der Längsachse (L_{F}) verlaufende jeweilige Erhebungen (20, 22) aufweisen, um einen jeweiligen Verdeckungsbereich (V) auszubilden, wobei zumindest eine der Erhebungen (20, 22) wenigstens eine Ausnehmung (21) aufweist, um einen der Zugangsbereiche (Z) auszubilden.

7. Steckverbindergehäuse (1) nach Anspruch 5 oder 6,
**dadurch gekennzeichnet, dass**
wenigstens eine der Erhebungen als Schutzwand (20) oder Schutzsteg (22) ausgebildet ist.

8. Steckverbindergehäuse (1) nach Anspruch 6 oder 7,
**dadurch gekennzeichnet, dass**
wenigstens eine der Ausnehmungen als Fenster (21), Einbuchtung oder Schlitz ausgebildet ist.

9. Steckverbindergehäuse (1) nach einem der Ansprüche 1 bis 8,
**gekennzeichnet durch**
einen Schutzbügel (23), der einen ersten Schenkel (24) und einen zweiten Schenkel (25) aufweist, wobei der erste Schenkel (24) einteilig mit dem ersten Schutzelement (16) und der zweite Schenkel (25) einteilig mit dem zweiten Schutzelement (18) verbunden ist, und wobei sich der Schutzbügel (23) von dem ersten Schutzelement (16) zu dem zweiten Schutzelement (18) erstreckt und die Rasteinrichtung (8) für deren mechanischen Schutz überbrückt.

10. Steckverbindergehäuse (1) nach Anspruch 9,
**dadurch gekennzeichnet, dass**
die Schenkel (24, 25) des Schutzbügels (23) entlang der Längsachse (L_{F}) versetzt zueinander positioniert sind, wobei der Schutzbügel (23) zwischen den beiden Schenkeln (24, 25) vorzugsweise einem kurvigen Verlauf folgt.

11. Steckverbindergehäuse (1) für einen Steckverbinder, aufweisend
- einen aus einem Kunststoff ausgebildeten Grundkörper (2);
- eine Rasteinrichtung (8) zur mechanischen Verbindung mit einer korrespondierenden Gegenrasteinrichtung eines Gegensteckverbinders, wobei die Rasteinrichtung (8) einen ersten Verbindungsabschnitt (9) aufweist, über den die Rasteinrichtung (8) einteilig mit dem Grundkörper (2) verbunden ist, wobei zwischen der Rasteinrichtung (8) und dem Grundkörper (2) zumindest abschnittsweise ein Freiraum (10) gebildet ist, der sich entlang einer Längsachse (L_{F}) auf dem Grundkörper (2) erstreckt; und
- einen Schutzbügel (23), der einen ersten Schenkel (24) und einen zweiten Schenkel (25) aufweist, wobei sich zumindest einer der Schenkel (24, 25) einteilig ausgehend von dem Grundkörper (2) erstreckt, und wobei die Rasteinrichtung (8) zwischen den Schenkeln (24, 25) angeordnet und von dem Schutzbügel (23) für deren mechanischen Schutz überbrückt ist, und wobei zumindest der Schenkel (24, 25), der einteilig mit dem Grundkörper (2) verbunden ist, den zwischen der Rasteinrichtung (8) und dem Grundkörper (2) ausgebildeten Freiraum (10) in zumindest einem Verdeckungsbereich (V) in einer Querrichtung (Q) quer zu der Längsachse (L_{F}) verdeckt,
**dadurch gekennzeichnet, dass**
die Schenkel (24, 25) zueinander axial entlang der Längsachse (L_{F}) des Freiraums (10) versetzt angeordnet sind, so dass der von einem der Schenkel (24, 25) in Querrichtung (Q) verdeckte Freiraum (10) ausgehend von dem anderen Schenkel (25, 24) entlang der Querrichtung (Q) zugänglich ist.

12. Spritzgießverfahren zur Herstellung eines Steckverbindergehäuses (1) gemäß einem der Ansprüche 1 bis 11, umfassend zumindest die folgenden Verfahrensschritte:
- Bereitstellen eines mehrteiligen Spritzgießwerkzeugs (28), das in seinem zusammengefügten Zustand eine Negativform für das Steckverbindergehäuse (1) ausbildet;
- Bewegen einer ersten Gussform (29) des Spritzgießwerkzeugs (28) entlang der Längsachse (L_{F}) relativ zu dem Steckverbindergehäuse (1), um axiale Bereiche zwischen der Rasteinrichtung (8) und den Schutzelementen (16, 18) zu entformen; und
- Bewegen einer zweiten Gussform (30) und einer der zweiten Gussform (30) gegenüberliegenden, dritten Gussform (31) des Spritzgießwerkzeugs (28) jeweils entlang der Querrichtung (Q) relativ zu dem Steckverbindergehäuse (1), um den Freiraum (10) zwischen der Rasteinrichtung (8) und dem Grundkörper (2) durch die Zugangsbereiche (Z) hindurch zu entformen.

13. Spritzgießverfahren nach Anspruch 12,
**dadurch gekennzeichnet, dass**
die erste Gussform (29) ausschließlich verwendet wird, um die axialen Bereiche zwischen der Rasteinrichtung (8) und den Schutzelementen (16, 18) in einem von einem abgangsseitigen Ende (5) ausgehenden, hinteren axialen Endabschnitt (6) entlang der Längsachse (L_{F}) zu entformen.

14. Spritzgießverfahren nach Anspruch 12 oder 13,
**dadurch gekennzeichnet, dass**
die zweite Gussform (30) und die dritte Gussform (31) zeitsynchron bewegt werden, um den Freiraum (10) gleichzeitig durch die Zugangsbereiche (Z) aller Schutzelemente (16, 18) zu entformen.

15. Spritzgießvorrichtung (27) zur Herstellung eines Steckverbindergehäuses (1) gemäß einem der Ansprüche 1 bis 11, aufweisend ein mehrteiliges Spritzgießwerkzeug (28), das in seinem zusammengefügten Zustand eine Negativform für das Steckverbindergehäuse (1) ausbildet, wobei eine erste Gussform (29) des Spritzgießwerkzeugs (28) zur Entformung des Steckverbindergehäuses (1) entlang der Längsachse (L_{F}) relativ zu dem Steckverbindergehäuse (1) bewegbar ist, um axiale Bereiche zwischen der Rasteinrichtung (8) und den Schutzelementen (16, 18) zu entformen, und wobei eine zweite Gussform (30) und eine dritte Gussform (31) des Spritzgießwerkzeugs (28) zur Entformung des Steckverbindergehäuses (1) jeweils entlang zu der Querrichtung (Q) relativ zu dem Steckverbindergehäuse (1) bewegbar und sich gegenüberliegend angeordnet sind, um den Freiraum (10) zwischen der Rasteinrichtung (8) und dem Grundkörper (2) durch die Zugangsbereiche (Z) hindurch zu entformen.

## Claims

1. Plug connector housing (1) for a plug connector, having
- a main body (2) made from a plastics material;
- a latching installation (8) for mechanically connecting to a corresponding mating latching installation of a mating plug connector, wherein the latching installation (8) has a first connection portion (9) by way of which the latching installation (8) is integrally connected to the main body (2), wherein a void (10), which extends along a longitudinal axis (L_{F}) on the main body (2), is at least in portions formed between the latching installation (8) and the main body (2);
- a first protective element (16) and a second protective element (18) which, proceeding from the main body (2), extend integrally in each case in such a manner that the latching installation (8) is disposed between the protective elements (16, 18), wherein each one of the protective elements (16, 18) in at least one covered region (V) covers the void (10) configured between the latching installation (8) and the main body (2) in a transverse direction (Q), the latter being transverse to the longitudinal axis (L_{F}),
wherein each one of the protective elements (16, 18) moreover configures at least one access region (Z) by way of which the void (10) is accessible along the transverse direction (Q),
**characterized in that**
each one of the covered regions (V) faces a respective access region (Z) of the respective other protective element (16, 18) along the transverse direction.

2. Plug connector housing (1) according to Claim 1,
**characterized in that**
the latching installation (8) has an elastic spring arm (11) which runs along the longitudinal axis (L_{F}) and on which a latching element (12), preferably a latching hook, is disposed, wherein the void (10) is situated at least between the latching element (12) and the main body (2) so as to, proceeding from a basic state of the spring arm (11), enable a deflection of the latching element (12) in the direction towards the main body (2), and wherein the spring arm (11) on a first end, by way of the first connection portion (9), is integrally connected to the main body (2) and moreover on a second end, facing away from the first end, by way of a second connection portion (14), is integrally connected to the main body (2), wherein the void (10) along the longitudinal axis (L_{F}) extends across the entire length between the two connection portions (9, 14).

3. Plug connector housing (1) according to Claim 1 or 2,
**characterized in that**
at least one of the covered regions (V) of one of the protective elements (16, 18), preferably all covered regions (V) of each of the protective elements (16, 18), in addition to the void (10) also at least in regions cover(s) the latching installation (8) in the transverse direction (Q).

4. Plug connector housing (1) according to Claim 3,
**characterized in that**
the protective elements (16, 18), in a front axial end portion (4) that proceeds from a plug-proximal end (3), do not cover the latching installation (8) in the transverse direction (Q).

5. Plug connector housing (1) according to one of Claims 1 to 4,
**characterized in that**
the protective elements (16, 18) have respective elevations (20, 22) which for configuring a respective covered region (V) run along the longitudinal axis (L_{F}), and have elevation-free regions which for configuring a respective access region (Z) run along the longitudinal axis (L_{F}).

6. Plug connector housing (1) according to one of Claims 1 to 5,
**characterized in that**
the protective elements (16, 18) have respective elevations (20, 22) which for configuring a respective covered region (V) run along the longitudinal axis (L_{F}), wherein at least one of the elevations (20, 22) has at least one clearance (21) so as to configure one of the access regions (Z).

7. Plug connector housing (1) according to Claim 5 or 6,
**characterized in that**
at least one of the elevations is configured as a protective wall (20) or protective web (22).

8. Plug connector housing (1) according to Claim 6 or 7,
**characterized in that**
at least one of the clearances is configured as a window (21), concavity or slot.

9. Plug connector housing (1) according to one of Claims 1 to 8,
**characterized by**
a protective bracket (23) which has a first leg (24) and a second leg (25), wherein the first leg (24) is integrally connected to the first protective element (16), and the second leg (25) is integrally connected to the second protective element (18), and wherein the protective bracket (23) extends from the first protective element (16) to the second protective element (18) and bridges the latching installation (8) in order for said latching installation (8) to be mechanically protected.

10. Plug connector housing (1) according to Claim 9,
**characterized in that**
the legs (24, 25) of the protective bracket (23) are positioned so as to be mutually offset along the longitudinal axis (L_{F}), wherein the protective bracket (23) between the two legs (24, 25) preferably follows a curved profile.

11. Plug connector housing (1) for a plug connector, having
- a main body (2) made from a plastics material;
- a latching installation (8) for mechanically connecting to a corresponding mating latching installation of a mating plug connector, wherein the latching installation (8) has a first connection portion (9) by way of which the latching installation (8) is integrally connected to the main body (2), wherein a void (10), which extends along a longitudinal axis (L_{F}) on the main body, is at least in portions formed between the latching installation (8) and the main body (2); and
- a protective bracket (23) which has a first leg (24) and a second leg (25), wherein at least one of the legs (24, 25) extends integrally so as to proceed from the main body (2), and wherein the latching installation (8) is disposed between the legs (24, 25) and is bridged by the protective bracket (23) in order for said latching installation (8) to be mechanically protected, and wherein at least that leg (24, 25) that is integrally connected to the main body (2) in at least one covered region (V) covers the void (10), which is configured between the latching installation (8) and the main body (2), in a transverse direction (Q) transverse to the longitudinal axis (L_{F}),
**characterized in that**
the legs (24, 25) are disposed so as to be mutually axially offset along the longitudinal axis (L_{F}) of the void (10) such that the void (10), which in the transverse direction (Q) is covered by one of the legs (24, 25), proceeding from the other leg (24, 25) is accessible along the transverse direction (Q).

12. Injection-moulding method for producing a plug connector housing (1) according to one of Claims 1 to 11, comprising at least the following method steps:
- providing a multiple-part injection-moulding tool (28) which in the assembled state thereof configures a female mould for the plug connector housing (1);
- moving a first casting mould (29) of the injection-moulding tool (28) along the longitudinal axis (L_{F}) relative to the plug connector housing (1) so as to demould axial regions between the latching installation (8) and the protective elements (16, 18); and
- moving a second casting mould (30) and a third casting mould (31), which lies opposite the second casting mould (30), of the injection-moulding tool (28) in each case along the transverse direction (Q) relative to the plug connector housing (1) so as to demould the void (10) between the latching installation (8) and the main body (2) by going through the access regions (Z).

13. Injection-moulding method according to Claim 12,
**characterized in that**
the first casting mould (29) is used exclusively for demoulding the axial regions between the latching installation (8) and the protective elements (16, 18) along the longitudinal axis (L_{F}) in a rear axial end portion (6) that proceeds from an output-proximal end (5).

14. Injection-moulding method according to Claim 12 or 13,
**characterized in that**
the second casting mould (30) and the third casting mould (31) are moved in a temporally synchronous manner so as to demould the void (10) simultaneously by going through the access regions (Z) of all protective elements (16, 18).

15. Injection-moulding device (27) for producing a plug connector housing (1) according to one of Claims 1 to 11, having a multiple-part injection-moulding tool (28) which in the assembled state thereof configures a female mould for the plug connector housing (1), wherein a first casting mould (29) of the injection-moulding tool (28) for demoulding the plug connector housing (1) is movable along the longitudinal axis (L_{F}) relative to the plug connector housing (1) so as to demould axial regions between the latching installation (8) and the protective elements (16, 18), and wherein a second casting mould (30) and a third casting mould (31) of the injection-moulding tool (28) for demoulding the plug connector housing (1) are in each case movable along the transvers direction (Q) relative to the plug connector housing (1) and are disposed so as to be mutually opposite in order for the void (10) between the latching installation (8) and the main body (2) to be demoulded by going through the access regions (Z).

## Revendications

1. Boîtier de connecteur enfichable (1) pour un connecteur enfichable, présentant
- un corps de base (2) réalisé en matière plastique ;
- un moyen d'encliquetage (8) destiné à une liaison mécanique avec un moyen de contre-verrouillage correspondant d'un connecteur enfichable homologue, dans lequel le moyen d'encliquetage (8) présente une première section de liaison (9) par le biais de laquelle le moyen d'encliquetage (8) est relié d'un seul tenant au corps de base (2), dans lequel entre le moyen d'encliquetage (8) et le corps de base (2) est formé au moins par sections un espace libre (10) qui s'étend le long d'un axe longitudinal (L_{F}) sur le corps de base (2) ;
- un premier élément de protection (16) et un second élément de protection (18) qui s'étendent à chaque fois d'un seul tenant à partir du corps de base (2) de telle sorte que le moyen d'encliquetage (8) soit disposé entre les éléments de protection (16, 18), dans lequel chacun des éléments de protection (16, 18) masque l'espace libre (10) réalisé entre le moyen d'encliquetage (8) et le corps de base (2) dans au moins une zone de masquage (V) dans une direction transversale (Q) transversalement à l'axe longitudinal (L_{F}), dans lequel chacun des éléments de protection (16, 18) réalise au moins une zone d'accès (Z), à travers laquelle l'espace libre (10) est accessible le long de la direction transversale (Q), **caractérisé en ce qu'**à chacune des zones de masquage (V) est opposée une des zones d'accès (Z) de l'autre élément de protection (18, 16) à chaque fois le long de la direction transversale.

2. Boîtier de connecteur enfichable (1) selon la revendication 1, **caractérisé en ce que** le moyen d'encliquetage (8) présente un bras à ressort (11), qui s'étend élastiquement le long de l'axe longitudinal (L_{F}), sur lequel est disposé un élément d'encliquetage (12), de préférence un crochet d'encliquetage, dans lequel l'espace libre (10) se trouve au moins entre l'élément d'encliquetage (12) et le corps de base (2) pour permettre, à partir d'un état de base du bras à ressort (11), une déflexion de l'élément d'encliquetage (12) en direction du corps de base (2), et dans lequel le bras à ressort (11) est relié d'un seul tenant au corps de base (2) au niveau d'une première extrémité par le biais de la première section de liaison (9) et est relié en outre d'un seul tenant au corps de base (2) au niveau d'une seconde extrémité opposée à la première extrémité par le biais d'une seconde section de liaison (14), dans lequel l'espace libre (10) s'étend le long de l'axe longitudinal (L_{F}) sur toute la longueur entre les deux sections de liaison (9, 14).

3. Boîtier de connecteur enfichable (1) selon la revendication 1 ou 2, **caractérisé en ce qu'**au moins une des zones de masquage (V) d'un des éléments de protection (16, 18), de préférence toutes les zones de masquage (V) de chacun des éléments de protection (16, 18), masque également au moins par sections le moyen d'encliquetage (8) dans la direction transversale (Q), en plus de l'espace libre (10).

4. Boîtier de connecteur enfichable (1) selon la revendication 3, **caractérisé en ce que** les éléments de protection (16, 18) ne masquent pas dans la direction transversale (Q) le moyen d'encliquetage (8) dans une section d'extrémité axiale avant (4) en partant d'une extrémité côté fiche (3).

5. Boîtier de connecteur enfichable (1) selon une des revendications 1 à 4, **caractérisé en ce que**
les éléments de protection (16, 18) présentent des élévations (20, 22) respectives s'étendant le long de l'axe longitudinal (L_{F}) pour réaliser une zone de masquage (V) respective et présentent des zones sans élévation s'étendant le long de l'axe longitudinal (L_{F}) afin de réaliser une zone d'accès (Z) respective.

6. Boîtier de connecteur enfichable (1) selon une des revendications 1 à 5, **caractérisé en ce que**
les éléments de protection (16, 18) présentent des élévations (20, 22) respectives s'étendant le long de l'axe longitudinal (L_{F}) afin de réaliser une zone de masquage (V) respective, dans lequel au moins une des élévations (20, 22) présente au moins un évidement (21) pour réaliser une des zones d'accès (Z).

7. Boîtier de connecteur enfichable (1) selon la revendication 5 ou 6, **caractérisé en ce qu'**au moins une des élévations est réalisée sous la forme d'une paroi de protection (20) ou d'une traverse de protection (22).

8. Boîtier de connecteur enfichable (1) selon la revendication 6 ou 7, **caractérisé en ce qu'**au moins un des évidements est réalisé sous la forme d'une fenêtre (21), d'une échancrure ou d'une fente.

9. Boîtier de connecteur enfichable (1) selon une des revendications 1 à 8, **caractérisé par** un étrier de protection (23), qui présente une première branche (24) et une seconde branche (25), dans lequel la première branche (24) est reliée d'un seul tenant au premier élément de protection (16) et la seconde branche (25) est reliée d'un seul tenant au second élément de protection (18) et dans lequel l'étrier de protection (23) s'étend depuis le premier élément de protection (16) jusqu'au second élément de protection (18) et le moyen d'encliquetage (8) est ponté pour sa protection mécanique.

10. Boîtier de connecteur enfichable (1) selon la revendication 9, **caractérisé en ce que** les branches (24, 25) de l'étrier de protection (23) sont positionnées de manière décalée l'une par rapport à l'autre le long de l'axe longitudinal (L_{F}), dans lequel l'étrier de protection (23) suit de préférence un tracé incurvé entre les deux branches (24, 25).

11. Boîtier de connecteur enfichable (1) pour un connecteur enfichable, présentant
- un corps de base (2) réalisé en matière plastique ;
- un moyen d'encliquetage (8) destiné à une liaison mécanique avec un moyen de contre-verrouillage correspondant d'un connecteur enfichable homologue, dans lequel le moyen d'encliquetage (8) présente une première section de liaison (9) par le biais de laquelle le moyen d'encliquetage (8) est relié d'un seul tenant au corps de base (2), dans lequel entre le moyen d'encliquetage (8) et le corps de base (2) est formé au moins par sections un espace libre (10) qui s'étend sur le corps de base (2) le long d'un axe longitudinal (L_{F}) ; et
- un étrier de protection (23) qui présente une première branche (24) et une seconde branche (25), dans lequel au moins une des branches (24, 25) s'étend d'un seul tenant à partir du corps de base (2), et dans lequel le moyen d'encliquetage (8) est disposé entre les branches (24, 25) et est ponté par l'étrier de protection (23) pour sa protection mécanique, et dans lequel au moins la branche (24, 25) qui est reliée d'un seul tenant au corps de base (2) masque l'espace libre (10) réalisé entre le moyen d'encliquetage (8) et le corps de base (2) dans au moins une zone de masquage (V) dans une direction transversale (Q) transversalement à l'axe longitudinal (L_{F}), **caractérisé en ce que** les branches (24, 25) sont disposées de manière décalée l'une par rapport à l'autre axialement le long de l'axe longitudinal (L_{F}) de l'espace libre (10) de telle sorte que l'espace libre (10) masqué par une des branches (24, 25) dans la direction transversale (Q) soit accessible à partir de l'autre branche (25, 24) le long de la direction transversale (Q).

12. Procédé de moulage par injection destiné à la fabrication d'un boîtier de connecteur enfichable (1) selon une des revendications 1 à 11, comprenant au moins les étapes de procédé suivantes :
- fournir un outil de moulage par injection (28) en plusieurs parties qui réalise dans son état assemblé un moule négatif pour le boîtier de connecteur enfichable (1) ;
- déplacer un premier moule de coulée (29) de l'outil de moulage par injection (28) le long de l'axe longitudinal (L_{F}) par rapport au boîtier de connecteur enfichable (1) pour démouler des zones axiales entre le moyen d'encliquetage (8) et les éléments de protection (16, 18) ; et
- déplacer un deuxième moule de coulée (30) et un troisième moule de coulée (31), de l'outil de moulage par injection (28), opposé au deuxième moule de coulée (30) à chaque fois le long de la direction transversale (Q) par rapport au boîtier de connecteur enfichable (1), afin de démouler l'espace libre (10) entre le moyen d'encliquetage (8) et le corps de base (2) à travers les zones d'accès (Z).

13. Procédé de moulage par injection selon la revendication 12, **caractérisé en ce que** le premier moule de coulée (29) est exclusivement utilisé pour démouler les zones axiales entre le moyen d'encliquetage (8) et les éléments de protection (16, 18) dans une section d'extrémité axiale arrière (6) à partir d'une extrémité côté sortie (5) le long de l'axe longitudinal (L_{F}).

14. Procédé de moulage par injection selon la revendication 12 ou 13, **caractérisé en ce que** le deuxième moule de coulée (30) et le troisième moule de coulée (31) sont déplacés de manière synchronisée dans le temps pour démouler l'espace libre (10) simultanément à travers les zones d'accès (Z) de tous les éléments de protection (16, 18).

15. Dispositif de moulage par injection (27) destiné à la fabrication d'un boîtier de connecteur enfichable (1) selon une des revendications 1 à 11, présentant un outil de moulage par injection (28) en plusieurs parties qui réalise dans son état assemblé un moule négatif pour le boîtier de connecteur enfichable (1), dans lequel un premier moule de coulée (29) de l'outil de moulage par injection (28) destiné à démouler le boîtier de connecteur enfichable (1) peut être déplacé le long de l'axe longitudinal (L_{F}) par rapport au boîtier de connecteur enfichable (1) afin de démouler des zones axiales entre le moyen d'encliquetage (8) et les éléments de protection (16, 18) et dans lequel un deuxième moule de coulée (30) et un troisième moule de coulée (31) de l'outil de moulage par injection (28) destiné à démouler le boîtier de connecteur enfichable (1) sont disposés de manière opposée et peuvent être déplacés à chaque fois le long de la direction transversale (Q) par rapport au boîtier de connecteur enfichable (1) afin de démouler l'espace libre (10) entre le moyen d'encliquetage (8) et le corps de base (2) à travers les zones d'accès (Z).
